# EUROPEAN PATENT APPLICATION

(11) **EP 4 836 472 A2**
(43) Date of publication of application: **04.11.2026**
(21) Application number: 26180655.8
(22) Date of filing: 02.03.2022
(51) Int. Cl.: H04W 12/03

(54) **DIRECT LINK ADDRESSING METHOD AND APPARATUS**

(30) Priority: 15.03.2021 CN 202110278095
(62) Document number(s) of the earlier application(s) in accordance with Art. 76 EPC: 22770300.6 / 4 294 064
(71) Applicant: HUAWEI TECHNOLOGIES CO., LTD., Shenzhen, Guangdong 518129 (CN)
(72) Inventor: HUANG, Guogang, Shenzhen, 518129 (CN); MONTEMURRO, Michael, Shenzhen, 518129 (CN); MCCANN, Stephen, Shenzhen, 518129 (CN)
(74) Representative: Pfenning, Meinig & Partner mbB

(57) **Abstract**

This application provides a direct link addressing method and apparatus, so that direct communication can be performed between a non-AP MLD and a non-AP MLD, or between a STA device and a non-AP MLD, thereby improving data transmission efficiency. This application may be applied to a Wi-Fi system. The method is applied to a first device, and the first device includes one or more stations STAs. The first device is connected to a third device, and the third device includes a plurality of access points APs. A second device is connected to the third device, and the second device includes a plurality of STAs. When the first device includes one STA, protected data is constructed by using an address of the first device, an address of the second device, and an address of a first AP connected to the first device. When the first device includes a plurality of STAs, protected data is constructed by using an address of the first device, an address of the second device, and an address of the third device. Therefore, the first device may transmit a first data unit over a direct link between the first device and the second device, thereby increasing a data transmission rate.

## Description

This application claims priority to Chinese Patent Application No. 202110278095.3, filed with the China National Intellectual Property Administration on March 15, 2021 and entitled "DIRECT LINK ADDRESSING METHOD AND APPARATUS", which is incorporated herein by reference in its entirety.

### TECHNICAL FIELD

This application relates to the communication field, and in particular, to a direct link addressing method and apparatus.

### BACKGROUND

With development of wireless communication technologies, increasing wireless communication devices support multi-link communication, to improve communication efficiency of the communication devices. A communication device supporting multi-link communication may be referred to as a multi-link device (multi-link device, MLD). The multi-link device includes an access point (non-access point, AP) MLD and a non-access point (non-access point, non-AP) MLD. The AP MLD includes a plurality of APs, and the non-AP MLD includes a plurality of stations STAs. When a communication system includes at least one AP MLD and a plurality of non-AP MLDs, a non-AP MLD may communicate with an AP MLD over a plurality of links, and two non-AP MLDs may communicate with each other by using an AP MLD. The communication system may further include a station (station, STA) device. The STA device includes one STA, and the STA device may communicate with a non-AP MLD by using an AP MLD.

However, communication between the two non-AP MLDs or between the STA device and the non-AP MLD still needs to be forwarded by using the AP MLD, which increases a transmission delay. For how to set up a direct link between a first non-AP MLD and a second non-AP MLD or between a STA device and a non-AP MLD for communication, there is no corresponding solution available in the industry.

### SUMMARY

Embodiments of this application provide a direct link addressing method and apparatus, so that direct communication can be performed between a non-AP MLD and a non-AP MLD, or between a STA device and a non-AP MLD, thereby improving data transmission efficiency.

To achieve the foregoing objective, this application uses the following technical solutions.

According to a first aspect, a direct link addressing method is provided, applied to a first device. The first device includes one or more stations STAs. The first device is connected to a third device, and the third device includes a plurality of access points APs. A second device is connected to the third device, and the second device includes a plurality of STAs. The direct link addressing method includes: determining protected data, and sending a first data unit. The protected data includes a first address, a second address, and a third address. When the first device includes one STA, the first address is an address of the second device, the second address is an address of the first device, the third address is an address of a first AP of the third device, and the first device is connected to the first AP of the third device. When the first device includes a plurality of STAs, the first address is an address of the second device, the second address is an address of the first device, and the third address is an address of the third device. The first data unit includes a first header, the first header is determined based on the protected data, and the first data unit is transmitted over a direct link between the first device and the second device.

According to the direct link addressing method described in the first aspect, when the first device includes one STA, the protected data is constructed by using the address of the first device, the address of the second device, and the address of the first AP connected to the first device. When the first device includes a plurality of STAs, the protected data is constructed by using the address of the first device, the address of the second device, and the address of the third device. Therefore, the first device may transmit the first data unit over the direct link between the first device and the second device, thereby increasing a data transmission rate. In addition, when the first device includes a plurality of STAs, the protected data is constructed by using the addresses of the devices, and a change of the direct link does not affect the protected data. Therefore, when data is transmitted across a plurality of direct links, encryption does not need to be performed again, thereby further increasing the data transmission rate.

Optionally, the protected data may be additional authentication data (additional authentical data, AAD), and the first data unit may be a management protocol data unit (management protocol data unit, MPDU).

In a possible design manner, the first header may include a fourth address, a fifth address, and a sixth address. When the first device includes one STA, the fourth address is an address of the second device, the fifth address is an address of the first device, and the sixth address is an address of the first AP of the third device. In this way, a legacy STA and the second device may communicate over a direct link, thereby increasing a data transmission rate.

Optionally, the first header may be an MPDU header.

In a possible design manner, the first header may include a fourth address, a fifth address, and a sixth address. When the first device includes a plurality of STAs, the fourth address is an address of a STA that corresponds to a first direct link and that is in the plurality of STAs of the second device, the fifth address is an address of a STA that corresponds to the first direct link and that is in the plurality of STAs of the first device, the sixth address is an address of an AP that corresponds to the first direct link and that is in the plurality of APs of the third device, and the first direct link is a direct link between the first device and the second device. In this way, a non-AP MLD and a non-AP MLD may communicate over a direct link, thereby increasing a data transmission rate.

In a possible design manner, the first data unit may include a tunneled direct-link setup (tunneled direct-link setup, TDLS) frame. The TDLS frame may include a first element, and the first element may indicate an identifier of a target link or an address of an AP that corresponds to the target link and that is in the plurality of APs of the third device. The target link is a second direct link to which the TDLS frame is applied, and the second direct link is a direct link between the first device and the second device. In this way, for a link-level (link-level) TDLS frame, a specific direct link to which the TDLS frame is applied may be indicated.

Optionally, the TDLS frame may be a TDLS channel switch request (Channel Switch Request) frame or a TDLS channel switch response (Channel Switch Response) frame. The TDLS channel switch request is used to request the target link to switch from a current channel to another channel, and the TDLS channel switch response indicates whether the target link agrees to switch from the current channel to the another channel. In this way, the first device and the second device may switch the target link from the current channel to the another channel for communication. In a multi-link TDLS scenario, the TDLS channel switch request/response may be transmitted over any direct link.

Optionally, the first element may be a link identifier element (Link Identifier element), or a newly defined element.

In a possible design, when the first device includes one STA, and the TDLS frame is a TDLS discovery request frame, the first element may indicate an identifier of a transmission link or an address of an AP that corresponds to the transmission link and that is in the plurality of APs of the third device, where the transmission link is a link for sending the TDLS discovery request frame. In this way, the legacy STA and the second device may communicate over the direct link, thereby increasing the data transmission rate.

In a possible design, when the first device includes one STA, and the TDLS frame is a TDLS discovery response frame, the first element indicates an identifier of a transmission link or an address of an AP that corresponds to the transmission link and that is in the plurality of APs of the third device, where the transmission link is a link for sending the TDLS discovery request frame. In other words, configured content of the first element corresponding to the TDLS frame that is a TDLS discovery response frame is the same as configured content of the first element corresponding to the TDLS frame that is a TDLS discovery request frame. In this way, the legacy STA and the second device may communicate over the direct link, thereby increasing the data transmission rate.

In a possible design, when the first device includes one STA, and the TDLS frame is a TDLS setup request frame, the first element indicates an identifier of a link between the first device and the third device, or an address of an AP that corresponds to the first device and that is in the plurality of APs of the third device, and the transmission link is a link for sending the TDLS discovery request frame. In this way, the legacy STA and the second device may communicate over the direct link, thereby increasing the data transmission rate.

In a possible design, when the first device includes one STA, and the TDLS frame is a TDLS setup response frame, a TDLS setup confirm frame, a TDLS teardown frame, a TDLS channel switch request frame, a TDLS channel switch response frame, a TDLS peer power saving management request frame, a TDLS peer power saving management response frame, a TDLS peer traffic indication frame, or a TDLS peer traffic response frame, for a specific implementation of the first element, refer to the foregoing implementation of the first element when the first device includes one STA and the TDLS frame is a TDLS setup request frame. Details are not described herein again. In this way, the non-AP MLD and the non-AP MLD may communicate over the direct link, thereby increasing the data transmission rate.

In a possible design, when the first device includes a plurality of STAs, and the TDLS frame is a TDLS discovery request frame, the first element indicates an identifier of a reference link or an address of an AP that corresponds to the reference link and that is in the plurality of APs of the third device. Optionally, the reference link may be a link indicated by a BSSID field in the link identifier element. In this way, the non-AP MLD and the non-AP MLD may communicate over the direct link, thereby increasing the data transmission rate.

In a possible design, when the first device includes a plurality of STAs, and the TDLS frame is a TDLS discovery response frame, the first element indicates an identifier of a common link for transmitting the TDLS discovery response frame, or an address of an AP that corresponds to the common link for transmitting the TDLS discovery response frame and that is in the plurality of APs of the third device. The common link is a common link of a link between the first device and the third device and a link between the second device and the third device, and an AP of the third device associated with a STA of the first device corresponding to the common link is the same as an AP of the third device associated with a STA of the second device corresponding to the common link. In this way, the non-AP MLD and the non-AP MLD may communicate over the direct link, thereby increasing the data transmission rate.

In a possible design, when the first device includes a plurality of STAs, and the TDLS frame is a TDLS setup request frame, a TDLS setup response frame, or a TDLS setup confirm frame, the first element indicates an identifier of a reference link, or an address of an AP that corresponds to the reference link and that is in the plurality of APs of the third device. In this way, a receive end can know a specific link is a corresponding reference link.

In a possible design, when the first device includes a plurality of STAs, and the TDLS frame is a TDLS teardown frame, the first element indicates an address of the third device. In this way, a receive end can know that the frame is sent by which device associated with which AP MLD.

In a possible design, when the first device includes a plurality of STAs, and the TDLS frame is a TDLS peer traffic indication frame or a TDLS peer traffic response frame, the first element indicates an address of the third device. In this way, a receive end can know that the frame is sent by which device associated with which AP MLD.

In a possible design manner, the first data unit may include the tunneled direct-link setup TDLS frame, and the TDLS frame may include a wakeup schedule element and a second element. An offset field in the wakeup schedule element is an offset relative to a first timing synchronization function threshold of a third direct link, the second element may indicate an identifier of the third direct link or an address of an AP that corresponds to the third direct link and that are in the plurality of APs of the third device, and the third direct link is a direct link between the first device and the second device. In this way, a time at which data is periodically woken up and received/sent can be accurately learned, to reduce power consumption.

Optionally, the TDLS frame may be a TDLS peer power saving management request frame and a TDLS peer power saving management response frame. In this way, in the multi-link TDLS scenario, the TDLS peer PSM request/response may be transmitted over any direct link, and the receive end can correctly parse the wakeup schedule element.

In a possible design manner, the first data unit may include a third element, and the third element may indicate to set up at least one fourth direct link on a first link. The first link is a common link of the link between the first device and the third device and the link between the second device and the third device, and the first link may include the at least one fourth direct link.

In this way, the first device and the second device may set up a direct link on the common link, to increase a data transmission rate.

In other words, the first link may be a common link between the first device and the third device and between the second device and the third device, and an AP of the third device associated with a STA of the first device corresponding to the first link is the same as an AP of the third device associated with a STA of the second device corresponding to the first link.

In a possible design manner, the third element may include a number of direct links field and a direct link identifier field, the number of direct links field may indicate a quantity of fourth direct links requested to be set up, and the direct link identifier field may include an address of at least one AP that separately corresponds to the at least one fourth direct link and that is in the plurality of APs of the third device or an identifier of the at least one fourth direct link.

In this way, the quantity of fourth direct links to be set up is indicated, so that the fourth direct link can be set up on some or all links of the first link, thereby improving flexibility of setting up a direct link. The direct link identifier field may be used to indicate links on which direct links are set up.

In a possible design manner, the direct link identifier field may further include an address of a first STA of the first device and an address of a second STA of the second device. In other words, the direct link identifier field may include addresses of affiliated STAs at two ends of the direct link.

In a possible design manner, a seventh address is bound to a TDLS peer key (TDLS peer key, TPK), and the seventh address is an address of an AP that corresponds to the direct link between the first device and the second device and that is in the plurality of APs of the third device or addresses of all the APs of the third device, and the address of the third device. In this way, security of communication between the first device and the second device over the direct link can be improved.

According to a second aspect, a direct link addressing method is provided, applied to a second device. The second device includes a plurality of stations STAs. The second device is connected to a third device, and the third device includes a plurality of access points APs. A first device is connected to the third device, and the first device includes one or more STAs. The direct link addressing method includes: receiving a first data unit, and parsing the first data unit to obtain a first header. The first data unit is transmitted over a direct link between the first device and the second device, and the first header may include a fourth address, a fifth address, and a sixth address. When the first device includes one STA, the fourth address is an address of the second device, the fifth address is an address of the first device, and the sixth address is an address of a first AP of the third device. When the first device includes a plurality of STAs, the fourth address is an address of a STA that corresponds to a first direct link and that is in the plurality of STAs of the second device, the fifth address is an address of a STA that corresponds to the first direct link and that is in the plurality of STAs of the first device, the sixth address is an address of an AP that corresponds to the first direct link and that is in the plurality of APs of the third device, and the first direct link is a direct link between the first device and the second device.

In a possible design manner, the direct link addressing method provided in the second aspect may further include: obtaining protected data based on the first header. The protected data includes a first address, a second address, and a third address. When the first device includes one STA, the first address is an address of the second device, the second address is an address of the first device, the third address is an address of the first AP of the third device, and the first device is connected to the first AP of the third device. When the first device includes a plurality of STAs, the first address is an address of the second device, the second address is an address of the first device, and the third address is an address of the third device.

In a possible design manner, the direct link addressing method provided in the second aspect may further include: parsing the first data unit to obtain a tunneled direct-link setup (tunneled direct-link setup, TDLS) frame, where the TDLS frame may include a first element, the first element may indicate an identifier of a target link or an address of an AP that corresponds to the target link and that is in the plurality of APs of the third device, the target link is a second direct link to which the TDLS frame is applied, and the second direct link is a direct link between the first device and the second device.

Optionally, the TDLS frame may be a TDLS channel switch request (Channel Switch Request) frame or a TDLS channel switch response (Channel Switch Response) frame. The TDLS channel switch request is used to request the target link to switch from a current channel to another channel, and the TDLS channel switch response indicates whether the target link agrees to switch from the current channel to the another channel.

In a possible design, when the first device includes one STA, and the TDLS frame is a TDLS discovery request frame, the first element may indicate an identifier of a transmission link or an address of an AP that corresponds to the transmission link and that is in the plurality of APs of the third device, where the transmission link is a link for sending the TDLS discovery request frame.

In a possible design, when the first device includes one STA, and the TDLS frame is a TDLS discovery response frame, the first element indicates an identifier of a transmission link or an address of an AP that corresponds to the transmission link and that is in the plurality of APs of the third device, where the transmission link is a link for sending the TDLS discovery request frame. In other words, configured content of the first element corresponding to the TDLS frame that is a TDLS discovery response frame is the same as configured content of the first element corresponding to the TDLS frame that is a TDLS discovery request frame.

In a possible design, when the first device includes one STA, and the TDLS frame is a TDLS setup request frame, the first element indicates an identifier of a link between the first device and the third device, or an address of an AP that corresponds to the first device and that is in the plurality of APs of the third device, and the transmission link is a link for sending the TDLS discovery request frame.

In a possible design, when the first device includes one STA, and the TDLS frame is a TDLS setup response frame, a TDLS setup confirm frame, a TDLS teardown frame, a TDLS channel switch request frame, a TDLS channel switch response frame, a TDLS peer power saving management request frame, a TDLS peer power saving management response frame, a TDLS peer traffic indication frame, or a TDLS peer traffic response frame, for a specific implementation of the first element, refer to the foregoing implementation of the first element when the first device includes one STA and the TDLS frame is a TDLS setup request frame. Details are not described herein again.

In a possible design, when the first device includes a plurality of STAs, and the TDLS frame is a TDLS discovery request frame, the first element indicates an identifier of a reference link or an address of an AP that corresponds to the reference link and that is in the plurality of APs of the third device. Optionally, the reference link may be a link indicated by a BSSID field in a link identifier element.

In a possible design, when the first device includes a plurality of STAs, and the TDLS frame is a TDLS discovery response frame, the first element indicates an identifier of a common link for transmitting the TDLS discovery response frame, or an address of an AP that corresponds to the common link for transmitting the TDLS discovery response frame and that is in the plurality of APs of the third device. The common link is a common link of a link between the first device and the third device and a link between the second device and the third device, and an AP of the third device associated with a STA of the first device corresponding to the common link is the same as an AP of the third device associated with a STA of the second device corresponding to the common link.

In a possible design, when the first device includes a plurality of STAs, and the TDLS frame is a TDLS setup request frame, a TDLS setup response frame, or a TDLS setup confirm frame, the first element indicates an identifier of a reference link, or an address of an AP that corresponds to the reference link and that is in the plurality of APs of the third device.

In a possible design, when the first device includes a plurality of STAs, and the TDLS frame is a TDLS teardown frame, the first element indicates an address of the third device.

In a possible design, when the first device includes a plurality of STAs, and the TDLS frame is a TDLS peer traffic indication frame or a TDLS peer traffic response frame, the first element indicates an address of the third device.

In a possible design manner, the direct link addressing method provided in the second aspect may further include: parsing the first data unit to obtain the TDLS frame, where the TDLS frame may include a wakeup schedule element and a second element. An offset field in the wakeup schedule element is an offset relative to a first timing synchronization function threshold of a third direct link, the second element may indicate an identifier of the third direct link or an address of an AP that corresponds to the third direct link and that are in the plurality of APs of the third device, and the third direct link is a direct link between the first device and the second device.

Optionally, the TDLS frame may be a TDLS peer power saving management request frame and a TDLS peer power saving management response frame.

In a possible design manner, the direct link addressing method provided in the second aspect may further include: parsing the first data unit to obtain a third element, where the third element may indicate to set up at least one fourth direct link on a first link. The first link is a common link of the link between the first device and the third device and the link between the second device and the third device, and the first link may include the at least one fourth direct link.

In a possible design manner, the third element may include a number of direct links field and a direct link identifier field, the number of direct links field may indicate a quantity of fourth direct links requested to be set up, and the direct link identifier field may include an address of at least one AP that separately corresponds to the at least one fourth direct link and that is in the plurality of APs of the third device or an identifier of the at least one fourth direct link.

In a possible design manner, the direct link identifier field may further include an address of a first STA of the first device and an address of a second STA of the second device.

In a possible design manner, a seventh address is bound to a TDLS peer key, and the seventh address may include an address of an AP that corresponds to the direct link between the first device and the second device and that is in the plurality of APs of the third device or addresses of all the APs of the third device, and the address of the third device.

In addition, for a technical effect of the direct link addressing method according to the second aspect, refer to the technical effect of the direct link addressing method according to the first aspect. Details are not described herein again.

According to a third aspect, a direct link addressing method is provided, applied to a second device. The second device includes a plurality of stations STAs. The second device is connected to a third device, and the third device includes a plurality of access points APs. A first device is connected to the third device, and the first device includes one or more STAs. The direct link addressing method includes: determining protected data, and sending a first data unit. The protected data includes a first address, a second address, and a third address. When the first device includes one STA, the first address is an address of the first device, the second address is an address of the second device, the third address is an address of a first AP of the third device, and the first device is connected to the first AP of the third device. When the first device includes a plurality of STAs, the first address is an address of the first device, the second address is an address of the second device, and the third address is an address of the third device. The first data unit includes a first header, the first header is determined based on the protected data, and the first data unit is transmitted over a direct link between the first device and the second device.

In a possible design manner, the first header may include a fourth address, a fifth address, and a sixth address. When the first device includes one STA, the fourth address is an address of the first device, the fifth address is an address of the second device, and the sixth address is an address of the first AP of the third device. In this way, protocol compatibility is maintained. When the second device is used as a TDLS initiator, a legacy STA can correctly parse the first data unit, so that the legacy STA can communicate with a non-AP MLD over a direct link, thereby increasing a data transmission rate.

In a possible design manner, the first header includes a fourth address, a fifth address, and a sixth address. When the first device includes a plurality of STAs, the fourth address is an address of a STA that corresponds to a first direct link and that is in the plurality of STAs of the first device, the fifth address is an address of a STA that corresponds to the first direct link and that is in the plurality of STAs of the second device, the sixth address is an address of an AP that corresponds to the first direct link and that is in the plurality of APs of the third device, and the first direct link is a direct link between the first device and the second device.

In a possible design manner, the first data unit may include a tunneled direct-link setup TDLS frame. The TDLS frame may include a first element, and the first element may indicate an identifier of a target link or an address of an AP that corresponds to the target link and that is in the plurality of APs of the third device. The target link is a second direct link to which the TDLS frame is applied, and the second direct link is a direct link between the first device and the second device.

In a possible design manner, the first data unit may include the tunneled direct-link setup TDLS frame, and the TDLS frame may include a wakeup schedule element and a second element. An offset field in the wakeup schedule element is an offset relative to a first timing synchronization function threshold of a third direct link, the second element may indicate an identifier of the third direct link or an address of an AP that corresponds to the third direct link and that are in the plurality of APs of the third device, and the third direct link is a direct link between the first device and the second device.

In a possible design, when the first device includes one STA, and the TDLS frame is a TDLS discovery request frame, the first element indicates an identifier of a reference link or an address of an AP that corresponds to the reference link and that is in the plurality of APs of the third device. The reference link may be a link indicated by a BSSID field in a link identifier element. In this way, protocol compatibility is maintained.

In a possible design, when the first device includes one STA, and the TDLS frame is a TDLS discovery response frame, the first element indicates an identifier of a transmission link or an address of an AP that corresponds to the transmission link and that is in the plurality of APs of the third device, where the transmission link is a link for sending the TDLS discovery request frame. In other words, configured content of the first element corresponding to the TDLS frame that is a TDLS discovery response frame is the same as configured content of the first element corresponding to the TDLS frame that is a TDLS discovery request frame. In this way, protocol compatibility is maintained.

In a possible design, when the first device includes one STA, and the TDLS frame is a TDLS setup request frame, the first element indicates an identifier of a link between the first device and the third device, or an address of an AP that corresponds to the first device and that is in the plurality of APs of the third device, and the transmission link is a link for sending the TDLS discovery request frame. In this way, protocol compatibility is maintained.

In a possible design, when the first device includes one STA, and the TDLS frame is a TDLS setup response frame, a TDLS setup confirm frame, a TDLS teardown frame, a TDLS channel switch request frame, a TDLS channel switch response frame, a TDLS peer power saving management request frame, a TDLS peer power saving management response frame, a TDLS peer traffic indication frame, or a TDLS peer traffic response frame, for a specific implementation of the first element, refer to the foregoing implementation of the first element when the first device includes one STA and the TDLS frame is a TDLS setup request frame. Details are not described herein again. In this way, protocol compatibility is maintained.

In a possible design, when the first device includes a plurality of STAs, and the TDLS frame is a TDLS discovery request frame, the first element indicates an identifier of a reference link or an address of an AP that corresponds to the reference link and that is in the plurality of APs of the third device. Optionally, the reference link may be a link indicated by a BSSID field in a link identifier element.

In a possible design, when the first device includes a plurality of STAs, and the TDLS frame is a TDLS discovery response frame, the first element indicates an identifier of a common link for transmitting the TDLS discovery response frame, or an address of an AP that corresponds to the common link for transmitting the TDLS discovery response frame and that is in the plurality of APs of the third device. The common link is a common link of a link between the first device and the third device and a link between the second device and the third device, and an AP of the third device associated with a STA of the first device corresponding to the common link is the same as an AP of the third device associated with a STA of the second device corresponding to the common link.

In a possible design, when the first device includes a plurality of STAs, and the TDLS frame is a TDLS setup request frame, a TDLS setup response frame, or a TDLS setup confirm frame, the first element indicates an identifier of a reference link, or an address of an AP that corresponds to the reference link and that is in the plurality of APs of the third device.

In a possible design, when the first device includes a plurality of STAs, and the TDLS frame is a TDLS teardown frame, the first element indicates an address of the third device.

In a possible design, when the first device includes a plurality of STAs, and the TDLS frame is a TDLS peer traffic indication frame or a TDLS peer traffic response frame, the first element indicates an address of the third device.

In a possible design manner, the first data unit may include a third element, and the third element may indicate to set up at least one fourth direct link on a first link. The first link is a common link of the link between the first device and the third device and the link between the second device and the third device, and the first link may include the at least one fourth direct link.

In a possible design manner, the third element may include a number of direct links field and a direct link identifier field, the number of direct links field may indicate a quantity of fourth direct links requested to be set up, and the direct link identifier field may include an address of at least one AP that separately corresponds to the at least one fourth direct link and that is in the plurality of APs of the third device or an identifier of the at least one fourth direct link.

In a possible design manner, the direct link identifier field may further include an address of a first STA of the first device and an address of a second STA of the second device.

In a possible design manner, a seventh address is bound to a TDLS peer key TPK, and the seventh address may include an address of an AP that corresponds to the direct link between the first device and the second device and that is in the plurality of APs of the third device or addresses of all the APs of the third device, and the address of the third device.

In addition, for a technical effect of the direct link addressing method according to the third aspect, refer to the technical effect of the direct link addressing method according to the first aspect. Details are not described herein again.

According to a fourth aspect, a direct link addressing method is provided, applied to a first device. The first device includes one or more station STAs. The first device is connected to a third device, and the third device includes a plurality of access points APs. A second device is connected to the third device, and the second device includes a plurality of STAs. The direct link addressing method includes: receiving a first data unit, and parsing the first data unit to obtain a first header. The first data unit is transmitted over a direct link between the first device and the second device. The first header may include a fourth address, a fifth address, and a sixth address. When the first device includes one STA, the fourth address is an address of the first device, the fifth address is an address of the second device, and the sixth address is an address of a first AP of the third device. When the first device includes a plurality of STAs, the fourth address is an address of a STA that corresponds to a first direct link and that is in the plurality of STAs of the first device, the fifth address is an address of a STA that corresponds to the first direct link and that is in the plurality of STAs of the second device, the sixth address is an address of an AP that corresponds to the first direct link and that is in the plurality of APs of the third device, and the first direct link is a direct link between the first device and the second device.

In a possible design manner, the direct link addressing method provided in the fourth aspect may further include: obtaining protected data based on the first header. The protected data includes a first address, a second address, and a third address. When the first device includes one STA, the first address is an address of the first device, the second address is an address of the second device, the third address is an address of the first AP of the third device, the first device is connected to the first AP of the third device, and the first device includes one STA. When the first device includes a plurality of STAs, the first address is an address of the first device, the second address is an address of the second device, and the third address is an address of the third device.

In a possible design manner, the direct link addressing method provided in the fourth aspect may further include: parsing the first data unit to obtain a tunneled direct-link setup TDLS frame, where the TDLS frame may include a first element, the first element may indicate an identifier of a target link or an address of an AP that corresponds to the target link and that is in the plurality of APs of the third device, the target link is a second direct link to which the TDLS frame is applied, and the second direct link is a direct link between the first device and the second device.

In a possible design, when the first device includes one STA, and the TDLS frame is a TDLS discovery request frame, the first element indicates an identifier of a reference link or an address of an AP that corresponds to the reference link and that is in the plurality of APs of the third device. The reference link may be a link indicated by a BSSID field in a link identifier element.

In a possible design, when the first device includes one STA, and the TDLS frame is a TDLS discovery response frame, the first element indicates an identifier of a transmission link or an address of an AP that corresponds to the transmission link and that is in the plurality of APs of the third device, where the transmission link is a link for sending the TDLS discovery request frame. In other words, configured content of the first element corresponding to the TDLS frame that is a TDLS discovery response frame is the same as configured content of the first element corresponding to the TDLS frame that is a TDLS discovery request frame.

In a possible design, when the first device includes one STA, and the TDLS frame is a TDLS setup request frame, the first element indicates an identifier of a link between the first device and the third device, or an address of an AP that corresponds to the first device and that is in the plurality of APs of the third device, and the transmission link is a link for sending the TDLS discovery request frame.

In a possible design, when the first device includes one STA, and the TDLS frame is a TDLS setup response frame, a TDLS setup confirm frame, a TDLS teardown frame, a TDLS channel switch request frame, a TDLS channel switch response frame, a TDLS peer power saving management request frame, a TDLS peer power saving management response frame, a TDLS peer traffic indication frame, or a TDLS peer traffic response frame, for a specific implementation of the first element, refer to the foregoing implementation of the first element when the first device includes one STA and the TDLS frame is a TDLS setup request frame. Details are not described herein again.

In a possible design, when the first device includes a plurality of STAs, and the TDLS frame is a TDLS discovery request frame, the first element indicates an identifier of a reference link or an address of an AP that corresponds to the reference link and that is in the plurality of APs of the third device. Optionally, the reference link may be a link indicated by a BSSID field in the link identifier element.

In a possible design, when the first device includes a plurality of STAs, and the TDLS frame is a TDLS discovery response frame, the first element indicates an identifier of a common link for transmitting the TDLS discovery response frame, or an address of an AP that corresponds to the common link for transmitting the TDLS discovery response frame and that is in the plurality of APs of the third device. The common link is a common link of a link between the first device and the third device and a link between the second device and the third device, and an AP of the third device associated with a STA of the first device corresponding to the common link is the same as an AP of the third device associated with a STA of the second device corresponding to the common link.

In a possible design, when the first device includes a plurality of STAs, and the TDLS frame is a TDLS setup request frame, a TDLS setup response frame, or a TDLS setup confirm frame, the first element indicates an identifier of a reference link, or an address of an AP that corresponds to the reference link and that is in the plurality of APs of the third device.

In a possible design, when the first device includes a plurality of STAs, and the TDLS frame is a TDLS teardown frame, the first element indicates an address of the third device.

In a possible design, when the first device includes a plurality of STAs, and the TDLS frame is a TDLS peer traffic indication frame or a TDLS peer traffic response frame, the first element indicates an address of the third device.

In a possible design manner, the direct link addressing method provided in the fourth aspect may further include: parsing the first data unit to obtain the TDLS frame, where the TDLS frame may include a wakeup schedule element and a second element. An offset field in the wakeup schedule element is an offset relative to a first timing synchronization function threshold of a third direct link, the second element may indicate an identifier of the third direct link or an address of an AP that corresponds to the third direct link and that are in the plurality of APs of the third device, and the third direct link is a direct link between the first device and the second device.

Optionally, the TDLS frame may be a TDLS peer power saving management request frame and a TDLS peer power saving management response frame.

In a possible design manner, the direct link addressing method provided in the fourth aspect may further include: parsing the first data unit to obtain a third element, where the third element may indicate to set up at least one fourth direct link on a first link. The first link is a common link of the link between the first device and the third device and the link between the second device and the third device, and the first link may include the at least one fourth direct link.

In a possible design manner, the third element may include a number of direct links field and a direct link identifier field, the number of direct links field may indicate a quantity of fourth direct links requested to be set up, and the direct link identifier field may include an address of at least one AP that separately corresponds to the at least one fourth direct link and that is in the plurality of APs of the third device or an identifier of the at least one fourth direct link.

In a possible design manner, the direct link identifier field may further include an address of a first STA of the first device and an address of a second STA of the second device.

In a possible design manner, a seventh address is bound to a TDLS peer key TPK, and the seventh address may include an address of an AP that corresponds to the direct link between the first device and the second device and that is in the plurality of APs of the third device or addresses of all the APs of the third device, and the address of the third device.

In addition, for a technical effect of the direct link addressing method according to the fourth aspect, refer to the technical effect of the direct link addressing method according to the first aspect. Details are not described herein again.

According to a fifth aspect, a direct link addressing method is provided, applied to a first device. The first device includes one or more station STAs. The first device is connected to a third device, and the third device includes a plurality of access points APs. A second device is connected to the third device, and the second device includes a plurality of STAs. The direct link addressing method includes: determining a first data unit, and sending the first data unit. The first data unit includes a first header, and the first header includes a fourth address, a fifth address, and a sixth address.

When the first device includes one STA, the fourth address is an address of the second device, the fifth address is an address of the first device, the sixth address is an address of a first AP of the third device, and the first device is connected to the first AP of the third device. When the first device includes a plurality of STAs, the fourth address is an address of the second device, the fifth address is an address of the first device, and the sixth address is an address of an AP that corresponds to a sixth direct link and that is in the plurality of APs of the third device, where the sixth direct link is a link for transmitting the first data unit between the first device and the second device. The first data unit is transmitted over a direct link between the first device and the second device.

In a possible design manner, the first data unit further includes a frame body, and the frame body may be a TDLS frame or data.

Optionally, the TDLS frame may be a TDLS discovery response frame.

According to the direct link addressing method provided in the fifth aspect, when the first device includes one STA, the first header is constructed by using the address of the first device, the address of the second device, and the address of the first AP connected to the first device. When the first device includes a plurality of STAs, the first header is constructed by using the address of the first device, the address of the second device, and the address of the AP that corresponds to the sixth direct link and that is in the plurality of APs of the third device, where the sixth direct link is a link for transmitting the TDLS frame between the first device and the second device. Therefore, the first device may transmit the first data unit over the direct link between the first device and the second device, without forwarding by the third device, thereby increasing a data transmission rate. In addition, a manner of configuring the sixth address may be the same in both a case in which the first device includes one STA and a case in which the first device includes a plurality of STAs, to avoid frequent modification of configured content of the sixth address, thereby further reducing a transmission delay.

Optionally, the TDLS frame may be a TDLS discovery response frame. The TDLS discovery response frame is encapsulated into a common management frame, and does not need to be encrypted. Therefore, corresponding AAD construction may not be determined.

According to a sixth aspect, a direct link addressing method is provided, applied to a second device. The second device includes a plurality of stations STAs. The second device is connected to a third device, and the third device includes a plurality of access points APs. A first device is connected to the third device, and the first device includes one or more STAs. The direct link addressing method includes: receiving a first data unit, and parsing the first data unit to obtain a first header. The first header includes a fourth address, a fifth address, and a sixth address.

When the first device includes one STA, the fourth address is an address of the second device, the fifth address is an address of the first device, the sixth address is an address of a first AP of the third device, and the first device is connected to the first AP of the third device. When the first device includes a plurality of STAs, the fourth address is an address of the second device, the fifth address is an address of the first device, and the sixth address is an address of an AP that corresponds to a sixth direct link and that is in the plurality of APs of the third device, where the sixth direct link is a link for transmitting the first data unit between the first device and the second device. The first data unit is transmitted over a direct link between the first device and the second device.

In a possible design manner, the direct link addressing method provided in the sixth aspect may further include: parsing the first data unit to obtain a frame body, where the frame body may be a TDLS frame or data.

Optionally, the TDLS frame may be a TDLS discovery response frame.

In addition, for a technical effect of the direct link addressing method according to the sixth aspect, refer to the technical effect of the direct link addressing method according to the fifth aspect. Details are not described herein again.

According to a seventh aspect, a direct link addressing method is provided, applied to a second device. The second device includes a plurality of stations STAs. The second device is connected to a third device, and the third device includes a plurality of access points APs. A first device is connected to the third device, and the first device includes one or more STAs. The direct link addressing method includes: determining a first data unit, and sending the first data unit. The first data unit includes a first header, and the first header includes a fourth address, a fifth address, and a sixth address.

When the first device includes one STA, the fourth address is an address of the first device, the fifth address is an address of the second device, the sixth address is an address of a first AP of the third device, and the first device is connected to the first AP of the third device. When the first device includes a plurality of STAs, the fourth address is an address of the first device, the fifth address is an address of the second device, and the sixth address is an address of an AP that corresponds to a sixth direct link and that is in the plurality of APs of the third device, where the sixth direct link is a link for transmitting the first data unit between the first device and the second device. The first data unit is transmitted over a direct link between the first device and the second device.

In a possible design manner, the first data unit further includes a frame body, and the frame body may be a TDLS frame or data.

Optionally, the TDLS frame may be a TDLS discovery response frame.

In addition, for a technical effect of the direct link addressing method according to the seventh aspect, refer to the technical effect of the direct link addressing method according to the fifth aspect. Details are not described herein again.

According to an eighth aspect, a direct link addressing method is provided, applied to a first device. The first device includes one or more station STAs. The first device is connected to a third device, and the third device includes a plurality of access points APs. A second device is connected to the third device, and the second device includes a plurality of STAs. The direct link addressing method includes: receiving a first data unit, and parsing the first data unit to obtain a first header. The first header includes a fourth address, a fifth address, and a sixth address.

When the first device includes one STA, the fourth address is an address of the first device, the fifth address is an address of the second device, the sixth address is an address of a first AP of the third device, and the first device is connected to the first AP of the third device. When the first device includes a plurality of STAs, the fourth address is an address of the first device, the fifth address is an address of the second device, and the sixth address is an address of an AP that corresponds to a sixth direct link and that is in the plurality of APs of the third device, where the sixth direct link is a link for transmitting the first data unit between the first device and the second device. The first data unit is transmitted over a direct link between the first device and the second device.

In a possible design manner, the direct link addressing method provided in the eighth aspect may further include: parsing the first data unit to obtain a frame body, where the frame body may be a TDLS frame or data.

Optionally, the TDLS frame may be a TDLS discovery response frame.

In addition, for a technical effect of the direct link addressing method according to the eighth aspect, refer to the technical effect of the direct link addressing method according to the fifth aspect. Details are not described herein again.

According to a ninth aspect, a direct link addressing apparatus is provided. The direct link addressing apparatus includes units or modules configured to perform the method according to any one of the first aspect, the fourth aspect, the fifth aspect, or the eighth aspect.

In this application, the direct link addressing apparatus according to the ninth aspect may be the first device, or a chip (system) or another component or assembly that may be disposed in the first device.

In addition, for a technical effect of the direct link addressing apparatus according to the ninth aspect, refer to the technical effect of the direct link addressing method according to any implementation of the first aspect or the fifth aspect. Details are not described herein again.

According to a tenth aspect, a direct link addressing apparatus is provided. The direct link addressing apparatus includes units or modules configured to perform the method according to any one of the second aspect, the third aspect, the sixth aspect, or the seventh aspect.

In this application, the direct link addressing apparatus according to the tenth aspect may be the second device, or a chip (system) or another component or assembly that may be disposed in the second device.

In addition, for a technical effect of the direct link addressing apparatus according to the tenth aspect, refer to the technical effect of the direct link addressing method according to any implementation of the first aspect or the fifth aspect. Details are not described herein again.

According to an eleventh aspect, a direct link addressing apparatus is provided. The direct link addressing apparatus includes a processor, the processor is coupled to a memory, and the memory is configured to store computer programs. The processor is configured to execute the computer programs stored in the memory, so that the direct link addressing apparatus performs the direct link addressing method according to any one of the possible implementations of the first aspect to the eighth aspect.

In a possible design, the direct link addressing apparatus according to the eleventh aspect may further include a transceiver. The transceiver may be a transceiver circuit or an input/output port. The transceiver may be used by the direct link addressing apparatus to communicate with another device.

In this application, the direct link addressing apparatus according to the eleventh aspect may be the first device, the second device, or a chip or a chip system disposed inside the first device or the second device.

In addition, for a technical effect of the direct link addressing apparatus according to the eleventh aspect, refer to the technical effect of the direct link addressing method according to any implementation of the first aspect to the eighth aspect. Details are not described herein again.

According to a twelfth aspect, a communication system is provided. The communication system includes a first device and a second device.

According to a thirteenth aspect, a chip system is provided. The chip system includes a processor and an input/output port, the processor is configured to implement processing functions in the first aspect to the eighth aspect, and the input/output port is configured to implement transceiver functions in the first aspect to the eighth aspect.

In a possible design, the chip system further includes a memory. The memory is configured to store program instructions and data that implement functions in the first aspect to the eighth aspect.

The chip system may include a chip, or may include a chip and another discrete component.

According to a fourteenth aspect, a computer-readable storage medium is provided, including computer programs or instructions. When the computer programs or the instructions are run on a computer, the computer is enabled to perform the direct link addressing method according to any one of the possible implementations of the first aspect to the eighth aspect.

According to a fifteenth aspect, a computer program product is provided, including computer programs or instructions. When the computer programs or the instructions are run on a computer, the computer is enabled to perform the direct link addressing method according to any one of the possible implementations of the first aspect to the eighth aspect.

### BRIEF DESCRIPTION OF DRAWINGS

FIG. 1 is a schematic diagram of an architecture of a communication system according to an embodiment of this application;
FIG. 2 is a schematic diagram of a structure of an AP MLD and a non-AP MLD that participate in communication according to an embodiment of this application;
FIG. 3 is a schematic diagram of a frame structure of a multi-link element according to an embodiment of this application;
FIG. 4 is a schematic diagram of a frame structure of a link identifier element according to an embodiment of this application;
FIG. 5 is a schematic diagram of a frame structure of AAD according to an embodiment of this application;
FIG. 6 is a schematic diagram of a frame structure of an MPDU according to an embodiment of this application;
FIG. 7 is a schematic flowchart of a direct link addressing method according to an embodiment of this application;
FIG. 8 is a schematic diagram of a structure of an AP MLD, a legacy STA, and a non-AP MLD 2 that participate in communication according to an embodiment of this application;
FIG. 9 is a schematic diagram of a structure of an AP MLD, a non-AP MLD 1, and a non-AP MLD 2 that participate in communication according to an embodiment of this application;
FIG. 10 is a schematic diagram of a structure of a non-AP MLD 1 and a non-AP MLD 2 that participate in communication according to an embodiment of this application;
FIG. 11 is a schematic diagram of a frame structure of a wakeup schedule element according to an embodiment of this application;
FIG. 12 is a schematic diagram of a frame structure of another multi-link element according to an embodiment of this application;
FIG. 13 is a schematic diagram of a frame structure of a frame body according to an embodiment of this application;
FIG. 14 is a schematic diagram of a frame structure of a TDLS link info element according to an embodiment of this application;
FIG. 15 is a schematic flowchart of another direct link addressing method according to an embodiment of this application;
FIG. 16 is a schematic flowchart of still another direct link addressing method according to an embodiment of this application;
FIG. 17 is a schematic flowchart of still another direct link addressing method according to an embodiment of this application;
FIG. 18 is a schematic diagram of a structure of a direct link addressing apparatus according to an embodiment of this application; and
FIG. 19 is a schematic diagram of a structure of another direct link addressing apparatus according to an embodiment of this application.

### DESCRIPTION OF EMBODIMENTS

In descriptions of this application, unless otherwise specified, "/" means "or". For example, A/B may represent A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to accompanying drawings. In addition, a combination of these solutions may be used.

In this application, the word such as "example" or "for example" is used to represent giving an example, an illustration, or a description. Any embodiment or design scheme described as an "example" or "for example" in this application should not be explained as being more preferable or having more advantages than another embodiment or design scheme. Exactly, use of the word such as "example" or "for example" is intended to present a related concept in a specific manner.

A multi-link device (multi-link device, MLD) includes one or more affiliated stations, and the affiliated station is a logical station. "A multi-link device includes an affiliated station" is also briefly described as "A multi-link device includes a station" in embodiments of this application. The affiliated STA may be an AP or a non-access point station (non-AP STA). For ease of description, in this application, a multi-link device whose affiliated station is an AP is referred to as an AP MLD, a multi-link AP, a multi-link AP device, or an access point AP. A single-link device whose affiliated station is an AP is referred to as an AP device, an access point, an AP, a single-link AP device, or an access point AP. A multi-link device whose affiliated station is a non-AP STA is referred to as a non-AP MLD, a multi-link STA, a multi-link STA device, a STA MLD, or the like. A single-link device whose affiliated station is a non-AP STA is referred to as a STA device, a station, a STA, a non-AP STA, or the like.

Technical solutions in embodiments of this application may be applied to various communication systems, for example, a system using the IEEE 802.11 standard. For example, the IEEE 802.11 standard includes but is not limited to the 802.11be standard or the next-generation 802.11 standard. Scenarios to which the technical solutions of this application are applicable include: communication between a non-AP MLD and an AP MLD, communication between a STA device and an AP MLD, communication between a non-AP MLD and a non-AP MLD, and communication between a STA device and a non-AP MLD.

The multi-link device MLD may implement wireless communication in compliance with IEEE 802.11 series protocols, for example, in compliance with an extremely high throughput (extremely high throughput, EHT) protocol, or in compliance with an 802.11be-based or 802.11be-compatible protocol, thereby implementing communication with another device. Certainly, the another device may be a multi-link device or may not be a multi-link device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and emergence of new service scenarios, the technical solutions provided in embodiments of this application are also applicable to similar technical problems.

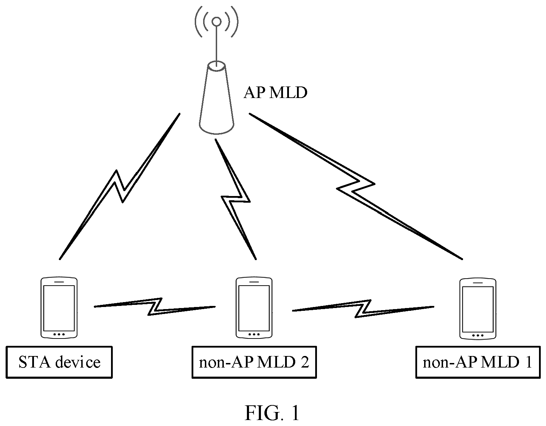

For ease of understanding embodiments of this application, a communication system shown in FIG. 1 is first used as an example to describe in detail a communication system applicable to embodiments of this application. For example, FIG. 1 is a schematic diagram of an architecture of a communication system to which a direct link addressing method according to an embodiment of this application is applicable.

As shown in FIG. 1, the communication system includes at least one AP MLD, and at least one non-AP MLD such as a non-AP MLD 1 and a non-AP MLD 2. Optionally, the communication system may further include at least one STA device. The AP MLD may include a plurality of APs, the non-AP MLD may include a plurality of STAs, the STA device includes one STA, and the STA device may be referred to as a legacy STA.

The AP MLD is an apparatus that is deployed in a wireless communication network and that provides a wireless communication function for a STA associated with the AP MLD. The AP MLD includes but is not limited to: an access point (access point, AP) in a wireless fidelity (wireless fidelity, Wi-Fi) system, such as a home gateway, a router, a server, a switch, and a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission and reception point (transmission and reception point, TRP; or transmission point, TP), or the like. The AP MLD may alternatively be a gNB or a transmission and reception point (TRP or TP) in a 5G system, for example, a new radio (new radio, NR) system, or one antenna panel or a group of antenna panels (including a plurality of antenna panels) of a base station in a 5G system. The AP MLD may alternatively be a network node, such as a baseband unit (BBU), a distributed unit (distributed unit, DU), or a road side unit (road side unit, RSU) having a base station function, that constitutes a gNB or a transmission and reception point.

The non-AP MLD or the STA device is a terminal that accesses the communication system and has a wireless transceiver function, or a chip or chip system that may be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a vehicle-mounted terminal, an RSU that has a terminal function, or the like. The terminal device in this application may alternatively be a vehicle-mounted module, a vehicle-mounted component, a vehicle-mounted chip, or a vehicle-mounted unit that is built in a vehicle as one or more components or units. The vehicle may implement the direct link addressing method provided in this application by using the built-in vehicle-mounted module, vehicle-mounted component, vehicle-mounted chip, or vehicle-mounted unit.

It should be noted that the direct link addressing method provided in embodiments of this application is applicable to any two nodes shown in FIG. 1. For specific implementation, refer to the following method embodiments. Details are not described herein.

It should be noted that, the solutions in embodiments of this application may also be used in another communication system, and a corresponding name may also be replaced with a name of a corresponding function in the another communication system.

It should be understood that FIG. 1 is merely a simplified schematic diagram of an example for ease of understanding. The communication system may further include another device not drawn in FIG. 1.

A frequency band on which the multi-link device operates may include but is not limited to: sub 1 GHz (sub 1 GHz), 2.4 GHz, 5 GHz, 6 GHz, and a high frequency 60 GHz. In addition, an MLD can communicate through a plurality of channels in a same frequency band. The plurality of frequency bands or the plurality of channels may be collectively referred to as a multi-link. A peak throughput is increased in a multi-link communication manner, a service transmission delay is reduced, and a rate of communication between MLDs is increased.

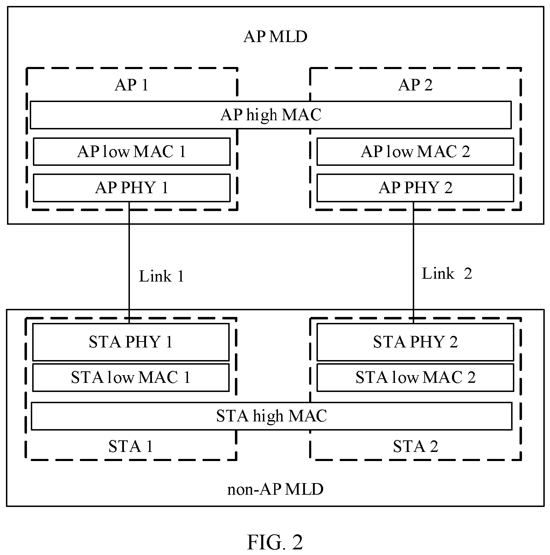

FIG. 2 shows a schematic diagram of a structure of an AP MLD and a non-AP MLD that participate in communication. As shown in FIG. 2, the AP MLD includes an affiliated AP 1 and an affiliated AP 2. The AP 1 and the AP 2 are independent of each other at a low (low) media access control (media access control, MAC) layer and a physical layer (physical layer, PHY), and share a high MAC (high MAC) layer. The non-AP MLD includes an affiliated STA 1 and an affiliated STA 2. The STA 1 and the STA 2 are independent of each other at a low MAC layer and a PHY layer, and share a high MAC layer. The AP MLD and the non-AP MLD may communicate over a link 1 and a link 2. One end of the link 1 is connected to the AP 1 of the AP MLD, and the other end of the link 1 is connected to the STA 1 of the non-AP MLD. One end of the link 2 is connected to the AP 2 of the AP MLD, and the other end of the link 2 is connected to the STA 2 of the non-AP MLD.

A multi-link device corresponds to a multi-link device address, and each link of the multi-link device corresponds to a respective link address. The AP MLD is used as an example. The multi-link device address may be an AP MLD MAC address (address). The non-AP MLD is used as an example. The multi-link device address may be a STA MLD MAC address. A link address between the AP MLD and the non-AP MLD may include an affiliated AP MAC address (affiliated AP MAC address) and an affiliated STA MAC address (affiliated STA MAC address) that correspond to two ends of a link.

It should be noted that FIG. 2 shows that the AP MLD and the non-AP MLD operate on only the two links. A quantity of links on which the AP MLD and the non-AP MLD operate is not limited in this embodiment of this application.

For example, the multi-link device is an apparatus having a wireless communication function. The apparatus may be a device of an entire system, or may be a chip, a processing system, or the like installed in the device of the entire system. The device on which the chip or the processing system is installed may be controlled by the chip or the processing system, to implement the method and functions in embodiments of this application.

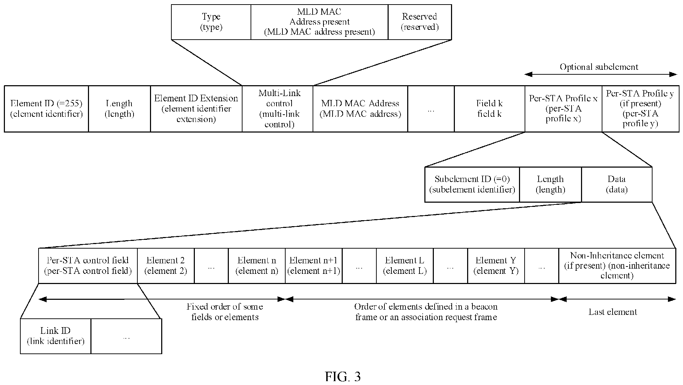

The following specifically describes setup of a plurality of links between the non-AP MLD and the AP MLD with reference to FIG. 2 and FIG. 3.

The non-AP MLD may perform a multi-link setup operation over one of the links to simultaneously associate a plurality of links of the AP MLD. In an association process, the non-AP MLD and the AP MLD may exchange an association request/response (Association Request/Response) frame over one link. A link used to exchange the association request/response frame may be referred to as a transmission link (transmission link), and another link is a non-transmission link (Non-transmitted Link). It should be understood that the association request/response may carry information about the plurality of links that need to be associated, to simultaneously associate the plurality of links between the non-AP MLD and the AP MLD.

For example, with reference to FIG. 2, the non-AP MLD sends an association request frame over the link 1, where the association request frame carries STA information of the link 1 and STA information of the link 2. It should be understood that the link 1 may be referred to as a transmission link, and the link 2 may be referred to as a non-transmission link. The AP MLD sends an association response frame to the non-AP MLD over the link 1, where the association response frame may carry AP information of the link 1 and AP information of the link 2. Therefore, the non-AP MLD and the AP MLD establish association over the link 1 and the link 2. Further, the non-AP MLD and the AP MLD may transmit data over the link 1 and the link 2.

To perform a multi-link operation, related information of the plurality of links may be indicated in a frame related to the multi-link operation. Therefore, a protocol defines a multi-link element (Multi-link element). For example, as shown in FIG. 3, information carried in the multi-link element is mainly divided into two parts. One part is multi-link device-level information (MLD-level info) including fields such as a multi-link control field and an MLD MAC address field, and the other part is per-station information (Per-STA Profile) which carries related information of a non-transmission link. The per-STA profile indicates a link identifier (Link ID) of a corresponding link, and the link identifier may indicate information about a related STA over the link corresponding to the per-STA profile. The MLD MAC address field carries an MLD MAC address of a transmit end.

To reduce signaling overheads, the multi-link element uses an inheritance structure. When content of a corresponding element in a non-transmission link is the same as content of a corresponding element in a transmission link, the corresponding element in the non-transmission link does not need to be carried in a per-STA profile of the link. The per-STA profile of the link is carried only when the content of the corresponding element in the non-transmission link is different from the content of the corresponding element in the transmission link.

It should be noted that a specific format of the multi-link element is not limited to that shown in FIG. 3, and a specific format of a link identifier element is not limited in this application.

It should be understood that the non-AP MLD may obtain, by receiving a probe response frame or a beacon frame, link information (for example, a link identifier) corresponding to each link, and may further obtain a channel on which each link operates and an address of each link, for example, a basic service set identifier (basic service set identifier, BSSID) of the link.

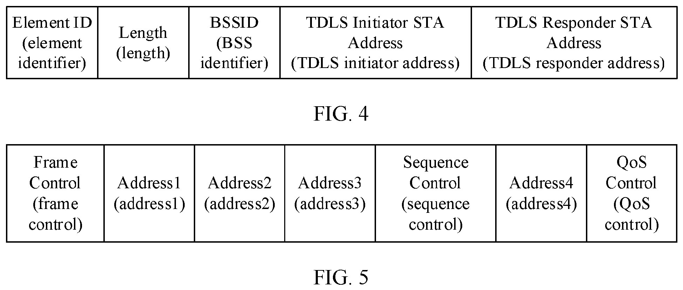

The following specifically describes tunneled direct-link setup (tunneled direct-link setup, TDLS) between two STA devices with reference to Table 1 and FIG. 4. FIG. 4 is a schematic diagram of a frame structure of a link identifier element according to an embodiment of this application.

It is assumed that both a first STA device and a second STA device are connected to a same AP device, the first STA device includes one STA, and the second STA device includes one STA. If the first STA device and the second STA device are in a wireless communication reachable range, a direct link may be set up between the first STA device and the second STA device, so that the first STA device and the second STA device can directly communicate with each other over the direct link without forwarding by using the AP device, thereby improving a data transmission rate and reducing a delay.

For example, TDLS-related operations include but are not limited to one or more of the following: TDLS discovery, TDLS setup, TDLS teardown, TDLS channel switch, TDLS power saving, and TDLS traffic indication. TDLS frames corresponding to the TDLS-related operations are shown in the following Table 1. In this embodiment of this application, the TDLS frame may include a TDLS action frame and a TDLS public action frame (public action frame). For example, with reference to the following Table 1, a TDLS discovery response frame (TDLS Discovery Response frame) belongs to the TDLS public action frame, and all TDLS frames except the TDLS discovery response frame belong to the TDLS action frame.

It should be understood that the first STA device and the second STA device may implement corresponding TDLS-related operations by exchanging TDLS frames. For example, the first STA device and the second STA device may implement TDLS power saving by exchanging a TDLS peer power saving management request frame (TDLS Peer Power Saving Management Request frame, TDLS Peer PSM Request frame) and a TDLS peer power saving management response frame (TDLS Peer PSM Response frame). Alternatively, the first STA device or the second STA device may implement a corresponding TDLS-related operation by using a TDLS frame. For example, the first STA device may implement TDLS teardown by using a TDLS teardown frame (TDLS Teardown frame).

A transmission mode of a TDLS frame may include: forwarding via AP (via AP) or direct (direct) transmission. Forwarding via AP indicates that a TDLS frame in this transmission mode needs to be used to forward data between the first STA device and the second STA device via the AP. The direct transmission indicates that the TDLS frame in this transmission mode may be transmitted from one STA device to another STA device over a direct link between the STA devices, and does not need to be forwarded by an AP device. It should be understood that some TDLS frames or a TDLS frame may be transmitted in one or two (both allowed) manners. For details, refer to the following Table 1. Details are not enumerated herein.

When the TDLS frame is forwarded via the AP device or sent over the direct link, the TDLS frame is encapsulated into a data frame (data frame) or a management frame (management frame) for sending. Specifically, the TDLS action frame may be encapsulated into a data frame for sending, and the TDLS public action frame may be directly sent in a form of a management frame. For details, refer to the following Table 1. Details are not enumerated herein.

**Table 1**

| TDLS frame | Transmission mode | Frame type |
|---|---|---|
| TDLS discovery request frame (TDLS Discovery Request frame) | via AP | Data frame |
| TDLS discovery response frame (TDLS Discovery Response frame) | direct | Management frame |
| TDLS setup request frame (TDLS Setup Request frame) | via AP | Data frame |
| TDLS setup response frame (TDLS Setup Response frame) | via AP | Data frame |
| TDLS setup confirm frame (TDLS Setup Confirm frame) | via AP | Data frame |
| TDLS teardown frame (TDLS Teardown frame) | both allowed | Data frame |
| TDLS channel switch request frame (TDLS Channel Switch Request frame) | direct | Data frame |
| TDLS channel switch response frame (TDLS Channel Switch Response frame) | direct | Data frame |
| TDLS peer power saving management request frame (TDLS Peer PSM Request frame) | Both allowed | Data frame |
| TDLS peer power saving management response frame (TDLS Peer PSM Response frame) | direct | Data frame |
| TDLS peer traffic indication frame (TDLS Peer Traffic Indication frame) | via AP | Data frame |
| TDLS peer traffic response frame (TDLS Peer Traffic Response frame) | direct | Data frame |

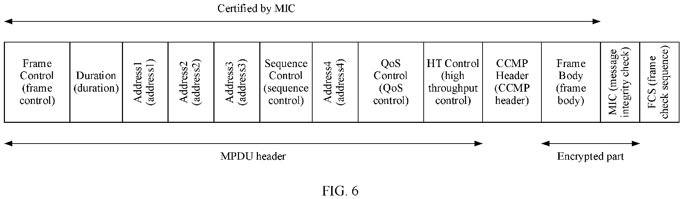

The following describes AAD and an MPDU in the following embodiments of this application with reference to FIG. 5 and FIG. 6.

As shown in FIG. 5, the AAD may include one or more of the following fields: a frame control (Frame Control) field, an address1 (Address1) field, an address2 (Address2) field, an address3 (Address3) field, a sequence control (Sequence Control) field, an address4 (Address4) field, and a quality of service control (Quality of Service Control, QoS Control) field.

Specifically, the address1 indicates a receiver address (receiver address, RA), the address2 indicates a transmitter address (transmitter address, TA), and the address3 indicates an address of an AP MLD associated with a receive end, or an address of an AP (an AP in the AP MLD) associated with the receive end. For a management frame, the address3 may be used for frame filtering. For example, it may be learned, based on the address3, whether the frame belongs to a basic service set (basic service set, BSS). If the frame does not belong to the basic service set, the frame is discarded.

It should be noted that a specific format of the AAD is not limited to that shown in FIG. 5. For example, the address4 in the AAD may be optional. The specific format of the AAD is not limited in this application.

As shown in FIG. 6, the MPDU may include one or more of the following fields: a frame control field, a duration (Duration) field, an address1 field, an address2 field, an address3 field, a sequence control field, an address4 field, a quality of service control field, a high throughput control (high throughput control, HT Control) field, a cipher block chaining message authentication code protocol header (cipher block chaining message authentication code protocol header, CCMP Header) field, a frame body (Frame Body) field, a message integrity check (message integrity code, MIC) field, and a frame check sequence (frame check sequence, FCS) field.

Specifically, the address1 indicates a receiver address, the address2 indicates a transmitter address, and the address3 indicates an address of an AP MLD associated with a receive end, or an address of an AP (an AP in the AP MLD) associated with the receive end, or an address of an AP (an AP in the AP MLD) associated with a link between a transmit end and the receive end.

As shown in FIG. 6, an MPDU header may include: the frame control, the duration, the address1, the address2, the address3, the sequence control, the address4, the quality of service control, and the high throughput control. The transmit end calculates the MIC based on the AAD and the frame body of the MPDU, places the MIC behind the frame body, and then encrypts the frame body of the MPDU and the MIC for transmission. After receiving the MPDU, the receive end performs MIC check and calculates one piece of MIC. Then, the receive end compares the calculated MIC with the received MIC to check whether the MPDU has been tampered with.

It should be noted that a specific format of the MPDU is not limited to that shown in FIG. 6. For example, the address4 in the MPDU may be optional. The specific format of the MPDU is not limited in this application.

Address configurations of a data frame and a management frame between a legacy STA and an AP device are described below with reference to Table 2 and Table 3. The AP device may include an affiliated AP.

For the data frame and the management frame that are transmitted between the legacy STA and the AP device, an address1, an address2, an address3, and an address4 in an MPDU header are correspondingly consistent with an address1, an address2, an address3, and an address4 in AAD. Specific configurations are shown in Table 2 and Table 3.

For example, the address1, the address2, the address3, and the address4 in the MPDU header of the data frame, and the address1, the address2, the address3, and the address4 in the AAD are shown in Table 2. In Table 2, when to distributed system (to distributed system, To DS) = 0 and from distributed system (From DS) = 0, it indicates point-to-point (Point-to-point, P2P), that is, a direct link, and communication is performed between STAs. When To DS = 0 and From DS = 1, it indicates downlink transmission, that is, a DS side sends information to a STA. When To DS = 1 and From DS = 0, it indicates uplink transmission, that is, the STA sends information to the DS side. A DA indicates a destination address (destination address, DA), an SA indicates a source address (source address, SA), and a BSSID indicates an address of the affiliated AP of the AP device. Configurations of the address3 and the address4 are divided into two cases: a MAC service data unit and short aggregate MAC service data unit case (MAC service data unit and short aggregate MAC service data unit case, MSDU and Short A-MSDU case), and a basic A-MSDU and dynamic A-MSDU case (Basic A-MSDU and Dynamic A-MSDU case).

**Table 2**

| To DS | From DS | Address1 | Address2 | Address3 | | Address4 | |
|---|---|---|---|---|---|---|---|
| | | | | MSDU and Short A-MSDU case | Basic A-MSDU and Dynamic A-MSDU case | MSDU and Short A-MSDU case | Basic A-MSDU and Dynamic A-MSDU case |
| 0 | 0 | RA = DA | TA = SA | BSSID | BSSID | N/A | N/A |
| 0 | 1 | RA | TA = BSSID | SA | BSSID | N/A | N/A |
| 1 | 0 | RA = BSSID | TA | DA | BSSID | N/A | N/A |
| 1 | 1 | RA | TA | DA | BSSID | N/A | BSSID |

For example, the address1, the address2, and the address3 in the MPDU header of the management frame, and the address1, the address2, and the address3 in the AAD are shown in Table 3. A STA MAC address is an address of the legacy STA, and a BSSID indicates an address of the affiliated AP of the AP device.

**Table 3**

| Frame type | Direction (direction) | Address1 | AddressA2 | Address3 |
|---|---|---|---|---|
| Management frame (management frame) | Uplink | BSSID | STA MAC Address | BSSID |
| | Downlink | STA MAC Address | BSSID | BSSID |

The following describes address configurations of a data frame and a management frame between a non-AP MLD and an AP MLD with reference to Table 4 and Table 5. The non-AP MLD may include a plurality of affiliated STAs, and the AP MLD may include a plurality of affiliated APs.

For example, for the data frame transmitted between the non-AP MLD and the AP MLD, specific configurations of an address1, an address2, and an address3 in AAD are shown in Table 4. For the data frame, the address1 and the address2 are set to corresponding device addresses when the AAD is constructed. In a case of an MSDU, for uplink data, an address3 is set as a destination address; and for downlink data, the address3 is set as a source address. In a case of an A-MSDU, an address 3 is set to an address of the AP MLD. When transmitted over an air interface, an address1 and an address2 in an MPDU header are set to corresponding link addresses, and an address3 in the MPDU header is set to a same value as the address3 in the AAD.

**Table 4**

| Frame type | Direction | Address1 | AddressA2 | Address3 | |
|---|---|---|---|---|---|
| | | | | MSDU | A-MSDU |
| Data frame between MLDs | Uplink | AP MLD MAC Address | Non-AP MLD MAC Address | DA | AP MLD MAC Address |
| | Downlink | Non-AP MLD MAC Address | AP MLD MAC Address | SA | AP MLD MAC Address |

For example, for the management frame transmitted between the non-AP MLD and the AP MLD, specific configurations of an address1, an address2, and an address3 in AAD are shown in Table 5.

It should be noted that in a case of a plurality of links, the management frame may be classified into a link-level (link-level) management frame and an MLD-level (MLD-level) management frame. The link-level management frame means that the management frame is for a specific link, for example, a channel switch request/response frame. The MLD-level management frame is for an entire multi-link device, for example, an add block acknowledgment (Add block ACK, ADDBA) frame.

**Table 5**

| Frame type | Direction | Address1 | AddressA2 | Address3 |
|---|---|---|---|---|
| MLD-level management frame | Uplink | AP MLD MAC Address | Non-AP MLD MAC Address | AP MLD MAC Address |
| | Downlink | Non-AP MLD MAC Address | AP MLD MAC Address | AP MLD MAC Address |
| Link-level management frame | Uplink | AP MLD MAC Address | Non-AP MLD MAC Address | Affiliated AP BSSID |
| | Downlink | Non-AP MLD MAC Address | AP MLD MAC Address | Affiliated AP BSSID |

Rules for configuring the address1, the address2, and the address3 in the AAD of the management frame and rules for configuring the address1, the address2, and the address3 in the MPDU header during transmission over the air interface are as follows: For the address1 and the address2, when the AAD is constructed, the address1 and the address2 are set to addresses of corresponding MLDs; and when transmitted over the air interface, the address1 and the address2 in the MPDU header are replaced with corresponding link addresses. For the address3, when the management frame is a link-level management frame, A3 in the AAD is set to an affiliated (Affiliated) AP address corresponding to a destination link. When transmitted over the air interface, A3 in the MPDU header is the same as A3 in the AAD. For the MLD-level management frame, A3 in the AAD is set to an AP MLD address. When transmitted over the air interface, A3 in the MPDU header is the same as A3 in the AAD.

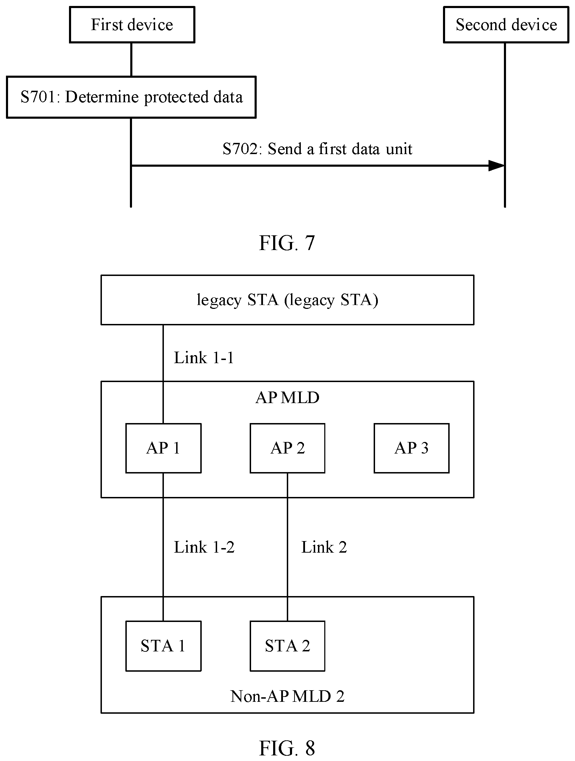

The following specifically describes the direct link addressing method provided in embodiments of this application with reference to FIG. 7 to FIG. 17.

For example, FIG. 7 is a schematic flowchart of a direct link addressing method according to an embodiment of this application. An example in which a first device is used as a TDLS initiator is used for description. The direct link addressing method is applicable to communication between the STA device and the non-AP MLD 2 that are shown in FIG. 1 or between the non-AP MLD 1 and the non-AP MLD 2 that are shown in FIG. 1.

As shown in FIG. 7, the direct link addressing method includes the following steps.

S701: The first device determines protected data.

For example, the first device may include one or more stations STAs, the first device is connected to a third device, and the third device may include a plurality of APs. When the first device includes one STA, the first device may be the STA device shown in FIG. 1. The STA device may be referred to as a legacy (legacy) STA. For ease of understanding, the legacy STA is used as an example for description in the following embodiments of this application. When the first device includes a plurality of STAs, the first device may be the non-AP MLD 1 shown in FIG. 1. The third device may be the AP MLD shown in FIG. 1.

The protected data may include a first address, a second address, and a third address.

For example, the protected data may be the AAD shown in FIG. 5, the first address may be the address1 in the AAD, the second address may be the address2 in the AAD, and the third address may be the address3 in the AAD.

In some embodiments, when the first device includes one STA, the first address is an address of a second device, the second address is an address of the first device, the third address is an address of a first AP of the third device, and the first device is connected to the first AP of the third device. The second device is connected to the third device, the second device may include a plurality of STAs, and the second device may be the non-AP MLD 2 shown in FIG. 1.

For example, FIG. 8 shows an example in which the first device is the legacy STA, the second device is the non-AP MLD 2, and the third device is the AP MLD. As shown in FIG. 8, the AP MLD includes an AP 1, an AP 2, and an AP 3. The legacy STA is connected to the AP 1 of the AP MLD, and a STA 1 and a STA 2 of the non-AP MLD 2 are respectively connected to the AP 1 and the AP 2 of the AP MLD. As shown in Table 6, the first address is an address of the non-AP MLD 2, for example, a non-AP MLD 2 MAC address; the second address is an address of the legacy STA, for example, a legacy STA MAC address; and the third address is an address of the AP 1, for example, a BSSID of the AP 1.

**Table 6**

| Scenario | Protected data | | |
|---|---|---|---|
| | First address | Second address | Third address |
| (legacy STA, non-AP MLD 2) | non-AP MLD 2 MAC Address | legacy STA MAC Address | BSSID of the AP 1 |

In some embodiments, when the first device includes a plurality of STAs, the first address is an address of the second device, the second address is an address of the first device, and the third address is an address of the third device.

**Table 7**

| Scenario | Protected data | | |
|---|---|---|---|
| | First address | Second address | Third address |
| (non-AP MLD 1, non-AP MLD 2) | non-AP MLD 2 MAC Address | non-AP MLD 1 MAC Address | AP MLD MAC Address |

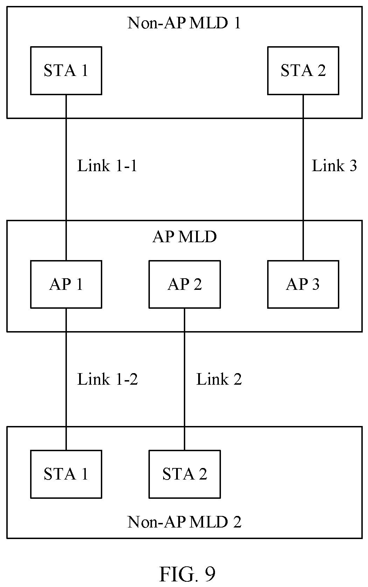

For example, FIG. 9 shows an example in which the first device is the non-AP MLD 1, the second device is the non-AP MLD 2, and the third device is the AP MLD. As shown in FIG. 9, the AP MLD includes an AP 1, an AP 2, and an AP 3, a STA 1 and a STA 2 of the non-AP MLD 1 are respectively connected to the AP 1 and the AP 3 of the AP MLD, and a STA 1 and a STA 2 of the non-AP MLD 2 are respectively connected to the AP 1 and the AP 2 of the AP MLD. As shown in Table 7, the first address is an address of the non-AP MLD 2, for example, the non-AP MLD 2 MAC address; the second address is an address of the non-AP MLD 1, for example, the non-AP MLD 1 MAC address; and the third address is an address of the AP MLD, for example, the AP MLD MAC address.

It should be noted that FIG. 8 and FIG. 9 are merely examples provided in this embodiment of this application. A quantity of STAs included in the non-AP MLD 2 and a quantity of APs included in the AP MLD are not limited, and how the non-AP MLD 2 is connected to the AP MLD and how the legacy STA is connected to the AP MLD are not limited.

S702: The first device sends a first data unit. Correspondingly, the second device receives the first data unit from the first device.

The first data unit may include a first header, the first header is determined based on the protected data, and the first data unit is transmitted over a direct link between the first device and the second device.

For example, the first data unit may be the MPDU shown in FIG. 6, and the first header may be the MPDU header shown in FIG. 6.

With reference to FIG. 9, the first data unit may be transmitted over a link 1 between the first device and the second device, and does not need to be forwarded by the second device, thereby reducing a transmission delay.

Optionally, before or in a process in which the first device sends the first data unit in S702, the first data unit may be determined. Specifically, one or more of the following Manner 1 to Manner 4 may be used.

Manner 1: The first device determines the first header of the first data unit.

Optionally, the first header may include a fourth address, a fifth address, and a sixth address.

For example, the first header may be the MPDU header shown in FIG. 6. The fourth address may be the address1 in the MPDU header, the fifth address may be the address2 in the MPDU header, and the sixth address may be the address3 in the MPDU header.

In some embodiments, when the first device includes one STA, the fourth address is an address of the second device, the fifth address is an address of the first device, and the sixth address is an address of the first AP of the third device.

For example, FIG. 8 shows an example in which the first device is the legacy STA, the second device is the non-AP MLD 2, and the third device is the AP MLD. As shown in FIG. 8, the AP MLD includes an AP 1, an AP 2, and an AP3, the legacy STA is connected to the AP 1 of the AP MLD, and a STA 1 and a STA 2 of the non-AP MLD 2 are respectively connected to the AP 1 and the AP 2 of the AP MLD. When the first device sends the first data unit to the second device, address configurations in the first data unit are shown in Table 8. The fourth address is an address of the non-AP MLD 2, for example, a non-AP MLD 2 MAC address. The fifth address is an address of the legacy STA, for example, a legacy STA MAC address. The sixth address is an address of the AP 1, for example, a BSSID of the AP 1.

The fourth address, the fifth address, and the sixth address in the first header may be respectively the same as the first address, the second address, and the third address in the protected data.

**Table 8**

| Scenario | First header | | |
|---|---|---|---|
| | Fourth address | Fifth address | Sixth address |
| (legacy STA, non-AP MLD 2) | non-AP MLD 2 MAC Address | legacy STA MAC Address | BSSID of the AP 1 |

In some embodiments, when the first device includes a plurality of STAs, the fourth address is an address of a STA that corresponds to a first direct link and that is in the plurality of STAs of the second device, the fifth address is an address of a STA that corresponds to the first direct link and that is in the plurality of STAs of the first device, the sixth address is an address of an AP that corresponds to the first direct link and that is in the plurality of APs of the third device, and the first direct link is a direct link between the first device and the second device.

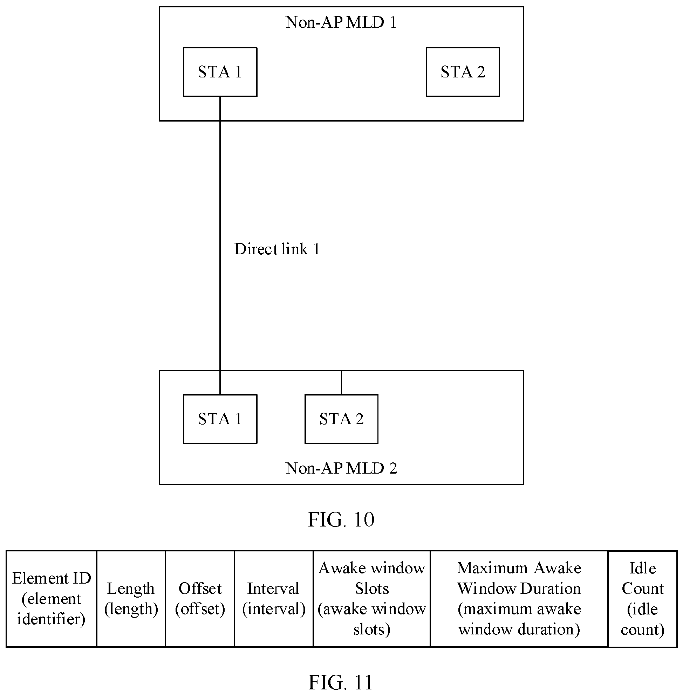

For example, FIG. 9 and FIG. 10 show an example in which the first device is the non-AP MLD 1, the second device is the non-AP MLD 2, and the third device is the AP MLD. As shown in FIG. 9, a link 1-1 and a link 3 are set up between the first device and the third device, and a link 1-2 and a link 2 are set up between the second device and the third device. As shown in FIG. 10, a STA 1 of the non-AP MLD 1 is connected to a STA 1 of the non-AP MLD 2, and corresponds to a direct link 1. When the first device sends the first data unit to the second device, address configurations in the first data unit are shown in Table 9. The fourth address is an address of the STA 1 of the non-AP MLD 2, for example, an affiliated STA 1 MAC address of the non-AP MLD 2. The fifth address is an address of the STA 1 of the non-AP MLD 1, for example, an affiliated STA 1 MAC address of the non-AP MLD 1. The sixth address is an address of an AP 1 corresponding to the link 1, for example, an affiliated AP 1 BSSID of the AP MLD or an affiliated AP 1 AP MLD MAC address.

It should be noted that, when a plurality of direct links exist between the first device and the second device, the first direct link may be a direct link for transmitting the first data unit in the direct links between the first device and the second device.

**Table 9**

| Scenario | First header | | |
|---|---|---|---|
| | Fourth address | Fifth address | Sixth address |
| (non-AP MLD 1, non-AP MLD 2) | affiliated STA 1 MAC address of the non-AP MLD 2 | affiliated STA 1 MAC address of the non-AP MLD 1 | Affiliated AP 1 BSSID of the AP MLD |

Manner 2: The first device determines a first element of the first data unit.

Specifically, the first data unit may include a TDLS frame, and the TDLS frame includes the first element. The first element may indicate an identifier (ID) of a target link or an address of an AP that corresponds to the target link and that is in the plurality of APs of the third device. For example, the first element may be set to a BSSID corresponding to the target link.

Optionally, the TDLS frame may be a TDLS channel switch request frame or a TDLS channel switch response frame.

It is assumed that the third device includes an AP 1, an AP 2, and an AP 3, and the AP 2 corresponds to the target link. In this case, the address of the AP that corresponds to the target link and that is in the plurality of APs of the third device is an address of the AP 2 of the third device, that is, an affiliated AP 2 BSSID of the AP MLD.

Optionally, the target link is a second direct link to which the TDLS frame is applied, and the second direct link is a direct link between the first device and the second device.

It is assumed that a direct link 1 and a direct link 2 exist between the first device and the second device, the TDLS frame is a TDLS channel switch request frame and a TDLS channel switch response frame, and a target link corresponding to the TDLS channel switch request/response frame is the direct link 2, the direct link 2 may be switched from a current channel to a specified channel based on a first element corresponding to the TDLS channel switch request/response frame.

In a multi-link TDLS scenario, the first element indicates the target link, and the TDLS channel switch request/response may be transmitted over any direct link, instead of necessarily being transmitted over the target link to which the TDLS channel switch request/response is to be switched, thereby improving transmission flexibility.

Optionally, the first element may be the link identifier element (Link Identifier element) shown in FIG. 4, or a newly defined element. In some embodiments, a first field in the first element may indicate the identifier of the target link or the address of the AP that corresponds to the target link and that is in the plurality of APs of the third device. For example, the first field may be a BSSID field of the link identifier element.

Manner 3: The first device determines a second element of the first data unit.

Specifically, the first data unit may include a TDLS frame, and the TDLS frame may include a wakeup schedule element and the second element. An offset field in the wakeup schedule element is an offset relative to a first timing synchronization function threshold of a third direct link, the second element indicates an identifier of the third direct link or an address of an AP that corresponds to the third direct link and that is in the plurality of APs of the third device, and the third direct link is a direct link between the first device and the second device.

It is assumed that a direct link 1 and a direct link 2 exist between the first device and the second device, the third device includes an AP 1, an AP 2, and an AP 3, the direct link 1 corresponds to the AP 1, the direct link 2 corresponds to the AP 2, and the offset field in the wakeup schedule element is an offset relative to a first timing synchronization function threshold of the direct link 2. In this case, the second element indicates an identifier of the direct link 2 or an address of the AP 2 of the third device, for example, an affiliated AP 2 BSSID of the AP MLD.

Different affiliated APs of the AP MLD may have independent timing synchronization functions (timing synchronization function, TSF). In this way, it may be determined that the offset field in the wakeup schedule element is relative to a TSF of a specific direct link by using an identifier or an address indicated by the second element.

Optionally, the TDLS frame may be a TDLS peer power saving management request frame and a TDLS peer power saving management response frame.

In this way, after a TDLS initiator and a TDLS responder exchange a TDLS peer power saving management request frame and a TDLS peer power saving management response frame, the TDLS initiator and the TDLS responder may periodically wake up and receive/send data based on a wakeup schedule element carried in the TDLS peer power saving management request frame and/or the TDLS peer power saving management response frame, thereby reducing power consumption. In addition, the third direct link relative to the offset field is indicated, so that in the multi-link TDLS scenario, the TDLS peer PSM request/response can be transmitted over any direct link, and an end can correctly parse the wakeup schedule element, thereby improving transmission flexibility.

Optionally, the second element may be the link identifier element (Link Identifier element) shown in FIG. 4, or a newly defined element. In some embodiments, a first field in the second element may indicate the identifier of the third direct link or the address of the AP that corresponds to the third direct link and that is in the plurality of APs of the third device. For example, the first field may be a BSSID field of the link identifier element.

Optionally, the wakeup schedule element may reuse an existing wakeup schedule element, or may be a newly defined element.

For example, with reference to FIG. 11, the wakeup schedule element (Wakeup Schedule element) may include one or more of the following fields: an element ID field, a length field, an offset (Offset) field, an interval (interval) field, an awake window slots (Awake window Slots) field, a maximum awake window duration (Maximum Awake Window Duration) field, and an idle count (Idle Count) field.

The offset field may indicate an offset of a first awake window relative to a TSF 0. The TSF may be a counter, and a value stored in the counter represents a time value. The interval field may indicate a time interval between two adjacent awake windows. The awake window slot field indicates duration of an awake window. The maximum awake window duration field indicates maximum duration of an awake window. The idle count field indicates a quantity of idle awake windows that are allowed to go through before a TDLS peer end deletes periodic wakeup schedule. The idle awake window means that no unicast frame is received from the TDLS peer end in the awake window. For example, if the first device does not receive a unicast frame from the second device in a process in which the first device goes through the quantity of awake windows indicated by the idle count field, the second device may delete the wakeup schedule element.

It should be noted that Manner 2 and Manner 3 may be used independently or in combination. When being used in combination, the first element and the second element may be a same element, for example, the first element, so that the first element may indicate the identifier of the target link or the address of the AP that corresponds to the target link and that is in the plurality of APs of the third device, and may indicate the identifier of the third direct link or the address of the AP that corresponds to the third direct link and that is in the plurality of APs of the third device. In other words, the target link and the third direct link are a same direct link.

For different TDLS frames, the following describes a configuration manner of the foregoing link identifier element or a newly defined element with reference to Table 10. In other words, when TDLS frames are different frames, the link identifier element, the newly defined element, the BSSID field in the link identifier element, or a first field of the newly defined element may correspond to different configured content. For ease of description, the link identifier element, the newly defined element, the first element, and the second element are collectively referred to as the first element below.

In some scenarios, when the first device includes one STA, and the TDLS frame is a TDLS discovery request frame, the first element indicates an identifier of a transmission link or an address of an AP that corresponds to the transmission link and that is in the plurality of APs of the third device. The transmission link is a link for sending the TDLS discovery request frame. For example, the first element may be set to a BSSID corresponding to the transmission link.

When the first device includes one STA, and the TDLS frame is a TDLS discovery response frame, the first element indicates an identifier of a transmission link or an address of an AP that corresponds to the transmission link and that is in the plurality of APs of the third device. The transmission link is a link for sending the TDLS discovery request frame.

**Table 10**

| TDLS frame | Transmission mode | Frame type | Note | First element | |
|---|---|---|---|---|---|
| | | | | legacy STA and the non-AP MLD 2 | non-AP MLD 1 and the non-AP MLD 2 |
| TDLS discovery request frame | Via AP | Data frame | MLD-level | Set to the BSSID corresponding to the transmission link | Set to a BSSID corresponding to a reference link |
| TDLS discovery response frame | Direct | Management frame | Allow unsolicited sending MLD-level | Set to a BSSID corresponding to the transmission link for sending the TDLS discovery request frame | Set to a BSSID corresponding to a common link for transmitting the TDLS discovery response frame (the TDLS discovery response frame may be transmitted over any common link) |
| TDLS setup request frame | Via AP | Data frame | MLD-level | Set to a BSSID of a link on which the legacy STA is located | Set to a BSSID corresponding to a reference link, and a BSSID in the TDLS setup request/response /confirm remains unchanged |
| TDLS setup response frame | Via AP | Data frame | MLD-level | Set to a BSSID of a link on which the legacy STA is located | |
| TDLS setup confirm frame | Via AP | Data frame | MLD-level | Set to a BSSID of a link on which the legacy STA is located | |
| TDLS teardown frame | Both allowed | Data frame | MLD-level; and if a direct link is unreachable, forwarding is performed by an AP | Set to a BSSID of a link on which the legacy STA is located | Set to an AP MLD MAC address |
| TDLS channel switch request frame | Direct | Data frame | Link-level | Set to a BSSID of a link on which the legacy STA is located | Set to the BSSID corresponding to the target link |
| TDLS channel switch response frame | Direct | Data frame | Link-level | Set to a BSSID of a link on which the legacy STA is located | Set to the BSSID corresponding to the target link |
| TDLS peer power saving management request frame | Both allowed | Data frame | MLD-level | Set to a BSSID of a link on which the legacy STA is located | Set to a BSSID of the third direct link corresponding to the wakeup schedule element |
| TDLS peer power saving management response | Direct | Data frame | MLD-level | Set to a BSSID of a link on which the legacy STA is located | Set to a BSSID of the third direct link corresponding to the wakeup schedule element |
| TDLS peer traffic indication frame | Via AP | Data frame | MLD-level | Set to a BSSID of a link on which the legacy STA is located | Set to the address of the third device, for example, an AP MLD MAC address |
| TDLS peer traffic response frame | Direct | Data frame | MLD-level | Set to a BSSID of a link on which the legacy STA is located | Set to the address of the third device, for example, an AP MLD MAC address |

In other words, configured content of the first element corresponding to the TDLS frame that is a TDLS discovery response frame is the same as configured content of the first element corresponding to the TDLS frame that is a TDLS discovery request frame. For example, the first element may be set to the BSSID corresponding to the transmission link for sending the TDLS discovery request frame.

When the first device includes one STA, and the TDLS frame is a TDLS setup request frame, the first element indicates an identifier of a link between the first device and the third device, or an address of an AP that corresponds to the first device and that is in the plurality of APs of the third device. The transmission link is a link for sending the TDLS discovery request frame. For example, the first element may be set to the BSSID corresponding to the link on which the legacy STA is located.

When the first device includes one STA, and the TDLS frame is a TDLS setup response frame, a TDLS setup confirm frame, a TDLS teardown frame, a TDLS channel switch request frame, a TDLS channel switch response frame, a TDLS peer power saving management request frame, a TDLS peer power saving management response frame, a TDLS peer traffic indication frame, or a TDLS peer traffic response frame, for a specific implementation of the first element, refer to the foregoing implementation of the first element when the first device includes one STA and the TDLS frame is a TDLS setup request frame. Details are not described herein again.

In some other scenarios, when the first device includes a plurality of STAs, and the TDLS frame is a TDLS discovery request frame, the first element indicates the identifier of the reference link or an address of an AP that corresponds to the reference link and that is in the plurality of APs of the third device. Optionally, the reference link may be a link indicated by the BSSID field in the link identifier element. For example, the first element may be set to the BSSID corresponding to the reference link.

When the first device includes a plurality of STAs, and the TDLS frame is a TDLS discovery response frame, the first element indicates an identifier of the common link for transmitting the TDLS discovery response frame, or an address of an AP that corresponds to the common link for transmitting the TDLS discovery response frame and that is in the plurality of APs of the third device. The common link is a common link of a link between the first device and the third device and a link between the second device and the third device, and an AP of the third device associated with a STA of the first device corresponding to the common link is the same as an AP of the third device associated with a STA of the second device corresponding to the common link.

Optionally, when the first device includes a plurality of STAs, the TDLS discovery response frame may be transmitted over any common link.

When the first device includes a plurality of STAs, and the TDLS frame is a TDLS setup request frame, a TDLS setup response frame, or a TDLS setup confirm frame, the first element indicates the identifier of the reference link, or the address of the AP that corresponds to the reference link and that is in the plurality of APs of the third device. For example, the first element may be set to the BSSID corresponding to the reference link.

When the first device includes a plurality of STAs, and the TDLS frame is a TDLS teardown frame, the first element indicates an address of the third device, and it may indicate tearing down all direct links between the first device and the second device. For example, the first element may be set to the AP MLD MAC address. Alternatively, the first element indicates an address of an AP that corresponds to the direct link between the first device and the second device and that is in the plurality of APs of the third device, for example, a BSSID corresponding to a direct link. For example, when the first element is set to an address of an affiliated AP corresponding to a direct link between the first device and the second device, it indicates that the direct link is torn down, that is, data cannot be subsequently received or sent over the direct link.

When the first device includes a plurality of STAs, and the TDLS frame is a TDLS channel switch request frame or a TDLS channel switch response frame, for a specific implementation of the first element, refer to the foregoing Manner 2. Details are not described herein again. For example, the first element may be set to the BSSID corresponding to the target link.

When the first device includes a plurality of STAs, and the TDLS frame is a TDLS peer power saving management request frame or a TDLS peer power saving management response frame, for a specific implementation of the first element, refer to the foregoing Manner 3. Details are not described herein again. For example, the first element may be set to the BSSID of the third direct link corresponding to the wakeup schedule element.

When the first device includes a plurality of STAs, and the TDLS frame is a TDLS peer traffic indication frame or a TDLS peer traffic response frame, the first element indicates the address of the third device. For example, the first element may be set to the AP MLD MAC address.

The following describes the reference link, the transmission link, and the common link in detail.

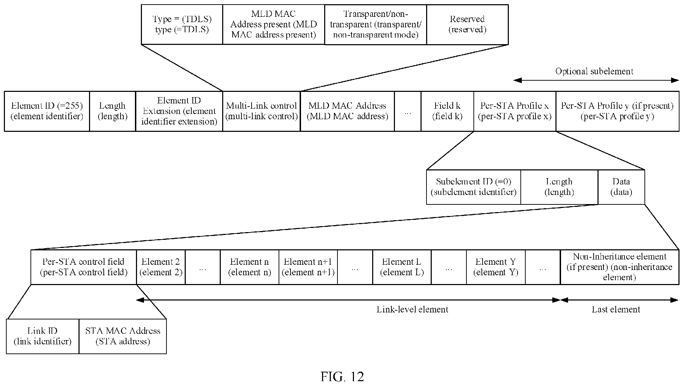

Reference link (Reference Link): When the frame body of the MPDU carries the multi-link element, a link indicated by the BSSID field in the link identifier element is referred to as a reference link. For example, for the specific format of the MPDU, refer to FIG. 6. For the specific format of the multi-link element, refer to FIG. 3 or FIG. 12. For a specific format of the link identifier element, refer to FIG. 4.

Specifically, for setup of multi-link TDLS, when the first device includes a plurality of STAs, a multi-link element may need to be carried in the following TDLS action frames: a TDLS setup request/response or a TDLS discovery request/response. After a TDLS initiator and a TDLS responder successfully exchange a TDLS discovery request/response frame, a non-AP MLD knows whether a peer end is an MLD. When both the TDLS initiator and the TDLS responder are MLDs, a multi-link element may be carried in a subsequent TDLS setup request/response frame.

FIG. 12 is a schematic diagram of a frame structure of another multi-link element according to an embodiment of this application. As shown in FIG. 12, a type subfield is set to a number corresponding to TDLS. A transparent/non-transparent (Transparent/non-transparent) transmission bit indicates an address mode used by the non-AP MLD. When the address mode is transparent, it indicates that a link address of the non-AP MLD is the same as a non-AP MLD address. When the address mode is non-transparent, it indicates that different links corresponding to the non-AP MLD use different link addresses, and the non-AP MLD address is different from the link addresses of the non-AP MLD. In this case, a corresponding link ID and an address used by an affiliated STA, that is, a link address, need to be indicated at the beginning of each per-STA profile. An MLD MAC address field is always set to the AP MLD MAC address.

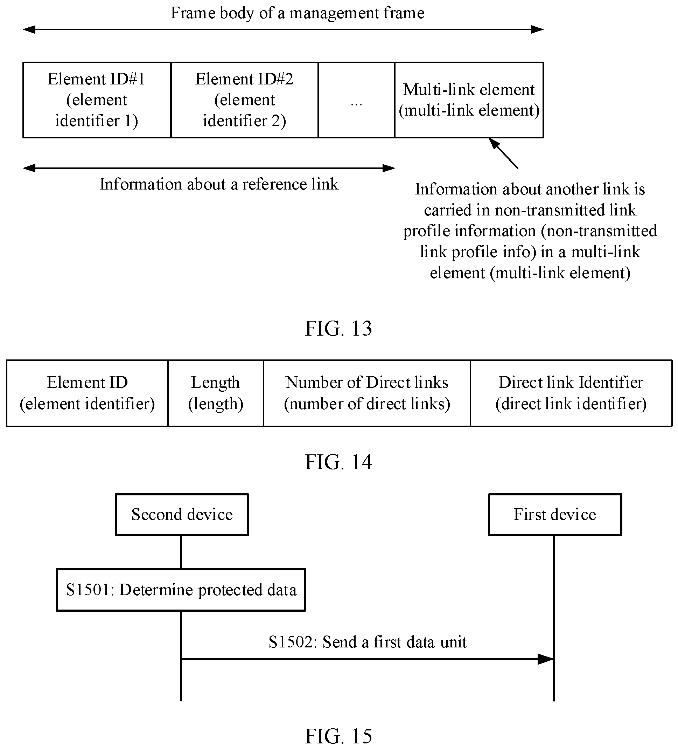

For a specific format of the frame body, refer to FIG. 13. The frame body may include information about a reference link (such as an element ID#1 and an element ID#2) and information about another link (multi-link element). For example, with reference to FIG. 3 or FIG. 12, the information about the another link may be carried in a per-STA profile in the multi-link element.

Transmission link (Transmitting Link): indicates a link on which a frame is sent. The corresponding link is referred to as a transmission link. It is assumed that a TDLS frame is sent over a link 1, the link 1 is referred to as a transmission link.

For a TDLS frame (for example, a TDLS discovery response) encapsulated into a management frame and directly transmitted, a transmission link is a reference link. Specifically, when the management frame is sent, it is usually required that the transmission link be consistent with the reference link. For example, if an initiator sends a multi-link association request frame over a link 1, a responder also needs to return a multi-link association response frame over the link 1.

For a TDLS frame encapsulated into a data frame, a transmission link may be different from a reference link. Specifically, when the data frame is sent, the transmission link may be any link, in other words, the data frame may be sent over any link. Therefore, the transmission link may be the same as or different from the reference link.

For example, a manner of sending the data frame may include: One possibility is that the data frame is sent according to a requirement of sending the management frame, to be specific, the data frame is sent back over a link that is sent. In addition, the transmitting link is consistent with the reference link. The other possibility is that the data frame is sent according to a requirement of sending the data frame, to be specific, the data frame is transmitted over any link. For example, a TDLS setup request is sent over a link 1, and a TDLS setup response is sent over a link 2. In this case, the transmitting link does not need to be consistent with the reference link.

Common link (Common Link): A direct link corresponding to two STAs (the STA refers to a legacy STA or an affiliated STA of a non-AP MLD) associated with a same affiliated AP may be referred to as a common link. For a (legacy STA, MLD) scenario, a link associated with the legacy STA is a common link. For a (non-AP MLD 1, non-AP MLD 2) scenario, a plurality of common links may exist.

For example, it is assumed that the AP MLD corresponds to a link 1, a link 2, and a link 3, the link 1 and the link 2 are set up between the non-AP MLD 1 and the AP MLD, and the link 1 and the link 3 are set up between the non-AP MLD 2 and the AP MLD. Both a STA 1 of the non-AP MLD 1 and a STA 1 of the non-AP MLD 2 are associated with an AP 1 of the AP MLD, and correspond to the link 1. A STA 2 of the non-AP MLD 1 is associated with an AP 2 of the AP MLD and corresponds to the link 2. A STA 3 of the non-AP MLD 2 is associated with an AP 3 of the AP MLD, and corresponds to the link 3. A direct link 1 and a direct link 2 are set up, the STA 1 of the non-AP MLD 1 and the STA 1 of the non-AP MLD 2 correspond to the direct link 1, and the STA 2 of the non-AP MLD 1 and the STA 3 of the non-AP MLD 2 correspond to the direct link 2. In this case, the direct link 1 may be referred to as a common link.

Manner 4: The first device determines a third element of the first data unit.

Optionally, the first data unit may include the third element, and the third element may indicate to set up at least one fourth direct link on a first link. The first link is a common link of the link between the first device and the third device and the link between the second device and the third device, and the first link may include the at least one fourth direct link.

In other words, the first link may be a common link between the first device and the third device and between the second device and the third device, and an AP of the third device associated with a STA of the first device corresponding to the first link is the same as an AP of the third device associated with a STA of the second device corresponding to the first link. In this way, the first device and the second device may set up a direct link on the common link, to increase a data transmission rate.

In some embodiments, the third element may include a number of direct links field and a direct link identifier field. The number of direct links field may indicate a quantity of fourth direct links requested to be set up. In this way, the quantity of fourth direct links to be set up is indicated, so that the fourth direct link can be set up on some or all links of the first link, thereby improving flexibility of setting up a direct link.

Specifically, the direct link identifier field may include an address of at least one AP that separately corresponds to the at least one fourth direct link and that is in the plurality of APs of the third device, or an identifier of the at least one fourth direct link. In other words, the direct link identifier field may include a BSSID of the at least one AP that separately corresponds to the at least one fourth direct link and that is in the plurality of APs of the third device, or a link ID of the at least one fourth direct link. In this way, links on which direct links are set up may be indicated.

It should be noted that, in embodiments of this application, the "MAC address of the AP", the "BSSID of the AP", and the "address of the AP" may express a same meaning when a difference between the "MAC address of the AP", the "BSSID of the AP", and the "address of the AP" is not emphasized.

Alternatively, optionally, the direct link identifier field may include an address of a first STA of the first device and an address of a second STA of the second device. In other words, the direct link identifier field may include addresses of affiliated STAs at two ends of the direct link, for example, a MAC address of the first STA or a MAC address of the second STA.

Alternatively, optionally, the direct link identifier field may include the address of the at least one AP that separately corresponds to the at least one fourth direct link and that is in the plurality of APs of the third device or the identifier of the at least one fourth direct link, the address of the first STA of the first device, and the address of the second STA of the second device.

The foregoing third element in Manner 4 is described by using a scenario in which a direct link is set up on the common link. In a possible design solution, a direct link may be set up on a non-common link between the first device and the second device. When the direct link is set up on the non-common link, an implementation of the third element is similar to a specific implementation of the third element corresponding to a scenario in which a direct link is set up on the common link.

For example, the third element may indicate to set up at least one fifth direct link on a second link. The second link is a link different from the link between the first device and the third device and the link between the second device and the third device, and the second link may include the at least one fifth direct link.

In other words, the second link may be a non-common link between the first device and the third device and between the second device and the third device, and an AP of the third device associated with a STA of the first device corresponding to the second link is different from an AP of the third device associated with a STA of the second device corresponding to the second link. In this way, the first device and the second device may set up a direct link on the non-common link, to increase a data transmission rate.

In some embodiments, the third element may include a number of direct links field and a direct link identifier field. The number of direct links field may indicate a quantity of fifth direct links requested to be set up. In this way, the quantity of fifth direct links to be set up is indicated, so that the fifth direct link can be set up on some or all links of the second link, thereby improving flexibility of setting up a direct link.

Specifically, the direct link identifier field may include an address of at least one AP that separately corresponds to the at least one fifth direct link and that is in the plurality of APs of the third device, or an identifier of the at least one fifth direct link. For example, one end of the fifth direct link corresponds to a STA of the first device, and the other end of the fifth direct link corresponds to a STA of the second device. The direct link identifier field may include an address of an AP that corresponds to the STA of the first device and that is in the plurality of APs of the third device, or an address of an AP that corresponds to the STA of the second device and that is in the plurality of APs of the third device.

In other words, the direct link identifier field may include a BSSID of an affiliated AP corresponding to either end of two ends of the fifth direct link or an identifier of the second link corresponding to the affiliated AP.

Alternatively, an indirect link may be represented by using an address of an affiliated AP corresponding to an initiator setting up the direct link or an identifier of the second link corresponding to the affiliated AP. For example, when direct link setup is initiated by the first device, the direct link identifier field may include the address of the AP that corresponds to the STA of the first device and that is in the plurality of APs of the third device, or the identifier of the second link corresponding to the affiliated AP.

In some embodiments, the third element may be a TDLS link information element (TDLS Link Info element). As shown in FIG. 14, the TDLS link information element may include one or more of the following fields: an element ID field, a length field, a number of direct links (Number of Direct links) field, and a direct link identifier (Direct link Identifier) field.

It should be noted that a format of the third element is not limited in this embodiment of this application, and FIG. 14 is merely an example of this application.

It should be noted that the foregoing Manner 1 to Manner 4 may be used in combination with the direct link addressing method shown in FIG. 7, or the foregoing Manner 1 to Manner 4 may be used independently or in combination with each other. This is not limited in this application.

In some embodiments, a seventh address is bound to a TPK.

Optionally, the seventh address includes an address of an AP that corresponds to the direct link between the first device and the second device and that is in the plurality of APs of the third device or addresses of all the APs of the third device, and the address of the third device.

In other words, an address of an affiliated AP (for example, a BSSID of the affiliated AP) corresponding to the direct link and the address of the third device may be bound to the TPK, or addresses of all affiliated APs (for example, BSSIDs of all the affiliated APs) of the third device and the address of the third device may be bound to the TPK.

Optionally, when the first device includes a plurality of STAs, the first device and the second device may negotiate to set up a direct link on some or all links, to bind an address of an affiliated AP corresponding to the set up direct link and the address of the third device to the TPK, or bind the addresses of all the affiliated APs of the third device and the address of the third device to the TPK. In this way, security of communication between the first device and the second device over the direct link can be improved.

In some embodiments, the direct link addressing method provided in this embodiment of this application may further include a TPK derivation process shown in the following step 1 and step 2. It should be noted that the step 1 and the step 2 may be used independently, or used in combination with the method, Manner 1, Manner 2, Manner 3, and/or Manner 3 shown in FIG. 7.

Step 1: The first device negotiates with the second device to determine an authentication and key management (authentication and key management, AKM) suite selector.

For example, as shown in Table 11, the AKM suite selector may include one or more of the following: an organizationally unique identifier (organizationally unique identifier, OUI), a suite type (suite type), authentication (authentication), key management (key management), key derivation (key derivation), and an authentication number (authentication number). For specific corresponding content of each item, refer to Table 11. Details are not described herein.

**Table 11**

| OUI | Suite type | Authentication | Key management | Key derivation | Authentication number |
|---|---|---|---|---|---|
| 00-0F-AC | 23 | Multi-link TDLS (ML-MLD-TDLS) | Multi-link TPK handshake between MLDs (ML-TPK handshake between MLD peers) | Defined in 12.7.1.6.2 (Defined in 12.7.1.6.2) | Not applicable (N/A) |

Step 2: The first device negotiates with the second device to derive the TDLS peer key TPK.

Optionally, the TPK may be determined by using the following Formula (1) and Formula (2):
TPK-Key-Input = Hash(min (SNonce, ANonce) || max (SNonce, ANonce)) (1), where in the foregoing Formula (1), Hash represents a hash algorithm, SNonce (supplicant nonce) represents a requester random number, ANonce (authenticator nonce) represents an authenticator random number, || represents concatenation or inclusion, a mathematical symbol min represents taking a minimum value, and a mathematical symbol max represents taking a maximum value; and
TPK = KDF-Hash-Length(TPK-Key-Input, "TDLS MLD PMK", min (MAC_I, MAC_R) || max (MAC_I, MAC_R) || AP MLD MAC Address || Affiliated AP Address1 || .... Affiliated AP Addressn) (2), where in the foregoing Formula (2), TPK represents the TDLS peer key, KDF-Hash-Length represents a key derivation function, "TDLS MLD PMK" represents a TDLS MLD pairwise master key (pairwise master key, PMK), || represents concatenation or inclusion, a mathematical symbol min represents taking a minimum value, a mathematical symbol max represents taking a maximum value, the AP MLD MAC Address represents the address of the third device (AP MLD), and the affiliated AP Address1 represents an address of an affiliated AP (an AP of the third device) corresponding to the direct link between the first device and the second device. When the first device is an initiator, MAC_I represents a MAC address of the first device, and MAC_R represents a MAC address of the second device.

It should be noted that the foregoing step 1 and step 2 may also be applied to derivation of the pairwise master key (pairwise master key, PTK), and the seventh address may be bound to the PTK. Details are not described herein again.

In some embodiments, the first device and the second device may complete TPK derivation handshake negotiation by exchanging a TDLS setup request/response/confirm (for details, refer to the following step a to step c). To be specific, the foregoing step 1 and step 2 may be used in combination with the following step a to step c to complete TPK derivation handshake negotiation.

An example in which the first device is used as a TDLS initiator is used.

Step a: The first device sends a TDLS setup request frame to the second device. Correspondingly, the second device receives the TDLS setup request frame from the first device.

Step b: The second device sends a TDLS setup response frame to the first device. Correspondingly, the first device receives the TDLS setup response frame from the second device.

Optionally, the second device may send the TDLS setup response frame to the first device based on a link identifier element and/or a TDLS link info element.

For example, the TDLS setup response frame may include accepting a TDLS setup request or not accepting a TDLS setup request. For example, a status code (Status Code) of the TDLS setup response frame indicates accept or not accept.

Step c: If the TDLS setup response frame indicates accept (Accept), the first device sends a TDLS setup confirm frame to the second device, to complete TPK derivation handshake negotiation.

According to the direct link addressing method described in FIG. 7, when the first device includes one STA, the protected data is constructed by using the address of the first device, the address of the second device, and the address of the first AP connected to the first device. When the first device includes a plurality of STAs, the protected data is constructed by using the address of the first device, the address of the second device, and the address of the third device. Therefore, the first device may transmit the first data unit over the direct link between the first device and the second device, thereby increasing a data transmission rate. In addition, when the first device includes a plurality of STAs, the protected data is constructed by using the addresses of the devices, and a change of the direct link does not affect the protected data. Therefore, when data is transmitted across a plurality of direct links, encryption does not need to be performed again, thereby further increasing the data transmission rate.

For example, FIG. 15 is a schematic flowchart of another direct link addressing method according to an embodiment of this application. An example in which a second device is used as a TDLS initiator is used for description. The direct link addressing method is applicable to communication between the STA device and the non-AP MLD 2 that are shown in FIG. 1 or between the non-AP MLD 1 and the non-AP MLD 2 that are shown in FIG. 1.

S1501: The second device determines protected data.

The protected data includes a first address, a second address, and a third address.

In some embodiments, when the first device includes one STA, the first address is an address of a first device, the second address is an address of the second device, the third address is an address of a first AP of a third device, and the first device is connected to the first AP of the third device.

With reference to FIG. 8, when the first device includes one STA, and the second device is used as the TDLS initiator, the first address, the second address, and the third address of the protected data are shown in Table 12. A difference from Table 6 in S701 lies in that configured content of the first address and configured content of the second address are exchanged, and a responder is the first device, so that the first address is an address of a legacy STA, for example, a legacy STA MAC address; and the initiator is the second device, so that the second address is an address of the non-AP MLD 2, for example, a non-AP MLD 2 MAC address. The third address is the same as the third address in Table 6, and the third address is an address of an AP 1, for example, a BSSID of the AP 1.

**Table 12**

| Scenario | Protected data | | |
|---|---|---|---|
| | First address | Second address | Third address |
| (legacy STA, non-AP MLD 2) | legacy STA MAC Address | non-AP MLD 2 MAC Address | BSSID of the AP 1 |

In some embodiments, when the first device includes a plurality of STAs, the first address is an address of the first device, the second address is an address of the second device, and the third address is an address of the third device.

With reference to FIG. 9, when the first device includes a plurality of STAs, and the second device is used as the TDLS initiator, the first address, the second address, and the third address of the protected data are shown in Table 13. Because the initiator and a responder change, a difference between Table 13 and Table 7 in S701 lies in that configured content of the first address and configured content of the second address are exchanged. For details, refer to Table 13. Details are not described herein.

**Table 13**

| Scenario | Protected data | | |
|---|---|---|---|
| | First address | Second address | Third address |
| (non-AP MLD 1, non-AP MLD 2) | non-AP MLD 1 MAC Address | non-AP MLD 2 MAC Address | AP MLD MAC Address |

S1502: The second device sends a first data unit.

The first data unit includes a first header, the first header is determined based on the protected data, and the first data unit is transmitted over a direct link between the first device and the second device.

For example, the first data unit may be the MPDU shown in FIG. 6, and the first header may be the MPDU header shown in FIG. 6.

Optionally, before or in a process in which the first device sends the first data unit in S702, the first data unit may be determined. Specifically, one or more of the following Manner 5 to Manner 8 may be used.

Manner 5: The second device determines the first header of the first data unit.

Optionally, the first header may include a fourth address, a fifth address, and a sixth address.

For example, the first header may be the MPDU header shown in FIG. 6. The fourth address may be the address1 in the MPDU header, the fifth address may be the address2 in the MPDU header, and the sixth address may be the address3 in the MPDU header.

In some embodiments, when the first device includes one STA, the fourth address is an address of the first device, the fifth address is an address of the second device, and the sixth address is an address of the first AP of the third device.

With reference to FIG. 8, when the first device includes one STA, and the second device is used as the TDLS initiator, the fourth address, the fifth address, and the sixth address of the MPDU header are shown in Table 14. Because the initiator and the responder change, a difference between Table 14 and Table 8 in the foregoing Manner 1 lies in that configured content of the fourth address and configured content of the fifth address are exchanged. For details, see Table 14. Details are not described herein.

**Table 14**

| Scenario | First header | | |
|---|---|---|---|
| | Fourth address | Fifth address | Sixth address |
| (legacy STA, non-AP MLD 2) | legacy STA MAC Address | non-AP MLD 2 MAC Address | BSSID of the AP 1 |

In some embodiments, when the first device includes a plurality of STAs, the fourth address is an address of a STA that corresponds to a first direct link and that is in the plurality of STAs of the first device, the fifth address is an address of a STA that corresponds to the first direct link and that is in a plurality of STAs of the second device, and the sixth address is an address of an AP that corresponds to the first direct link and that are in a plurality of APs of the third device. The first direct link is a direct link between the first device and the second device.

With reference to FIG. 9 and FIG. 10, when the first device includes a plurality of STAs, and the second device is used as the TDLS initiator, the fourth address, the fifth address, and the sixth address of the MPDU header are shown in Table 15. Because the initiator and the responder change, a difference between Table 15 and Table 9 in the foregoing Manner 1 lies in that configured content of the fourth address and configured content of the fifth address are exchanged. For details, see Table 15. Details are not described herein.

It should be noted that, when a plurality of direct links exist between the first device and the second device, the first direct link may be a direct link for transmitting the first data unit in the direct links between the first device and the second device.

**Table 15**

| Scenario | First header | | |
|---|---|---|---|
| | Fourth address | Fifth address | Sixth address |
| (non-AP MLD 1, non-AP MLD 2) | affiliated STA 1 MAC address of the non-AP MLD 1 | affiliated STA 1 MAC address of the non-AP MLD 2 | Affiliated AP 1 BSSID of the AP MLD |

Manner 6: The second device determines a first element of the first data unit.

In some embodiments, the first data unit may include a TDLS frame, and the TDLS frame includes the first element. The first element indicates an identifier of a target link or an address of an AP that corresponds to the target link and that is in the plurality of APs of the third device. For example, the first element may be set to a BSSID corresponding to the target link.

Optionally, the target link is a second direct link to which the TDLS frame is applied, and the second direct link is a direct link between the first device and the second device.

For specific implementations of Manner 6, the TDLS frame, and the first element, refer to the foregoing Manner 2. Details are not described herein again.

Manner 7: The second device determines a second element of the first data unit.

In some embodiments, the first data unit may include a TDLS frame, and the TDLS frame may include a wakeup schedule element and the second element. An offset field in the wakeup schedule element is an offset relative to a first timing synchronization function threshold of a third direct link, the second element may indicate an identifier of the third direct link or an address of an AP that corresponds to the third direct link and that is in the plurality of APs of the third device, and the third direct link is a direct link between the first device and the second device. For a specific implementation, refer to the corresponding implementation in the foregoing Manner 3. Details are not described herein again.

It should be noted that, similar to Manner 2 and Manner 3, Manner 6 and Manner 7 may be used independently or in combination, and details are not described herein again.

**Table 16**

| TDLS frame | Transmission mode | Frame type | Note | First element | |
|---|---|---|---|---|---|
| | | | | legacy STA and the non-AP MLD 2 | non-AP MLD 1 and the non-AP MLD 2 |
| TDLS discovery request frame | Via AP | Data frame | MLD-level | Set to a BSSID corresponding to a reference link | Set to a BSSID corresponding to a reference link |
| TDLS discovery response frame | Direct | Management frame | Allow unsolicited sending MLD-level | Set to a BSSID corresponding to a transmission link for sending the TDLS discovery request frame | Set to a BSSID corresponding to a common link for transmitting the TDLS discovery response frame (the TDLS discovery response frame may be transmitted over any common link) |
| TDLS setup request frame | Via AP | Data frame | MLD-level | Set to a BSSID of a link on which the legacy STA is located | Set to a BSSID corresponding to a reference link, and a BSSID in the TDLS setup request/respons e/confirm remains unchanged |
| TDLS setup response frame | Via AP | Data frame | MLD-level | Set to a BSSID of a link on which the legacy STA is located | |
| TDLS setup confirm frame | Via AP | Data frame | MLD-level | Set to a BSSID of a link on which the legacy STA is located | |
| TDLS teardown frame | Both allowed | Data frame | MLD-level; and if a direct link is unreachable, forwarding is performed by an AP | Set to a BSSID of a link on which the legacy STA is located | Set to an AP MLD MAC address or a BSSID of a direct link |
| TDLS channel switch request frame | Direct | Data frame | Link-level | Set to a BSSID of a link on which the legacy STA is located | Set to the BSSID corresponding to the target link |
| TDLS channel switch response frame | Direct | Data frame | Link-level | Set to a BSSID of a link on which the legacy STA is located | Set to the BSSID corresponding to the target link |
| TDLS peer power saving management request frame | Both allowed | Data frame | MLD-level | Set to a BSSID of a link on which the legacy STA is located | Set to a BSSID of the third direct link corresponding to the wakeup schedule element |
| TDLS peer power saving management response | Direct | Data frame | MLD-level | Set to a BSSID of a link on which the legacy STA is located | Set to the BSSID of the third direct link corresponding to the wakeup schedule element |
| TDLS peer traffic indication frame | Via AP | Data frame | MLD-level | Set to a BSSID of a link on which the legacy STA is located | Set to the address of the third device, for example, an AP MLD MAC address |
| TDLS peer traffic response frame | Direct | Data frame | MLD-level | Set to a BSSID of a link on which the legacy STA is located | Set to the address of the third device, for example, an AP MLD MAC address |

For different TDLS frames, the following describes a configuration manner of the foregoing link identifier element or a newly defined element with reference to the foregoing Table 16. In other words, when TDLS frames are different frames, the link identifier element, the newly defined element, the BSSID field in the link identifier element, or a first field of the newly defined element may correspond to different configured content. For ease of description, the link identifier element, the newly defined element, the first element, and the second element are collectively referred to as the first element below.

A main difference between a manner of configuring the first element when the second device is used as the TDLS initiator and a manner of configuring the first element when the first device is used as the TDLS initiator lies in a scenario in which the first device includes one STA and the TDLS frame is a TDLS discovery request frame.

For example, when the first device includes one STA, and the TDLS frame is a TDLS discovery request frame, the first element indicates an identifier of a reference link, or an address of an AP that corresponds to the reference link and that is in the plurality of APs of the third device. The reference link may be a link indicated by the BSSID field in the link identifier element. For example, the first element may be set to the BSSID corresponding to the reference link.

In another scenario shown in Table 16, for a specific implementation of the first element, refer to the implementation of the corresponding first element in Table 10 when the first device is used as the TDLS initiator. Details are not described herein again.

For specific implementations of the reference link, the transmission link, and the common link, refer to corresponding implementations in the foregoing Manner 3. Details are not described herein again.

Manner 8: The second device determines a third element of the first data unit.

Optionally, the first data unit may include the third element, the third element may indicate to set up at least one fourth direct link on a first link, the first link is a common link of a link between the first device and the third device and a link between the second device and the third device, and the first link includes the at least one fourth direct link. For a specific implementation, refer to the corresponding implementation in the foregoing Manner 4. Details are not described herein again.

In a possible design solution, a direct link may be set up between the first device and the second device on a non-common link. When the direct link is set up on the non-common link, an implementation of the third element is similar to a specific implementation of the third element corresponding to a scenario in which a direct link is set up on the common link.

For example, the third element may indicate to set up at least one fifth direct link on a second link. The second link is a link different from the link between the first device and the third device and the link between the second device and the third device, and the second link may include the at least one fifth direct link. In this way, the first device and the second device may set up a direct link on the non-common link, to increase a data transmission rate. For a specific implementation, refer to the corresponding implementation in the foregoing Manner 4. Details are not described herein again.

It should be noted that the foregoing Manner 5 to Manner 8 may be used in combination with the direct link addressing method shown in FIG. 15, or the foregoing Manner 5 to Manner 8 may be used independently or in combination with each other. This is not limited in this application.

In some embodiments, a seventh address is bound to a TDLS peer key TPK. Optionally, the seventh address may include an address of an AP that corresponds to the direct link between the first device and the second device and that is in the plurality of APs of the third device or addresses of all the APs of the third device, and the address of the third device. For a specific implementation, refer to the implementation in which the first device binds the seventh address to the TPK. Details are not described herein again.

In a possible design solution, the direct link addressing method provided in this embodiment of this application may further include a TPK derivation process shown in the following step 3 and step 4. It should be noted that step 3 and step 4 may be used independently, or used in combination with the method, Manner 5, Manner 6, Manner 7, and/or Manner 8 shown in FIG. 15.

Step 3: The first device negotiates with the second device to determine an authentication and AKM suite selector. For a specific implementation, refer to the foregoing step 1, and details are not described herein again.

Step 4: The first device negotiates with the second device to derive the TDLS peer key TPK. For a specific implementation, refer to the foregoing step 2, and details are not described herein again.

It should be noted that the foregoing step 3 and step 4 may also be applied to derivation of a pairwise master key (pairwise master key, PTK), and the seventh address may be bound to the PTK. Details are not described herein again.

In some embodiments, the first device and the second device may complete TPK derivation handshake negotiation by exchanging a TDLS setup request/response/confirm (for details, refer to the following step d to step f). To be specific, the foregoing step 3 and step 4 may be used in combination with the following step d to step f to complete TPK derivation handshake negotiation.

An example in which the second device is used as the TDLS initiator is used.

Step d to step f are similar to the foregoing step a to step c, and step d to step f respectively correspond to the foregoing step a to step c. A main difference lies in that the first device in the foregoing step a to step c is replaced with the second device, and the second device is replaced with the first device. Details are not described herein again.

According to the direct link addressing method described in FIG. 15, when the first device includes one STA, the protected data is constructed by using the address of the first device, the address of the second device, and the address of the first AP connected to the first device. When the first device includes a plurality of STAs, the protected data is constructed by using the address of the first device, the address of the second device, and the address of the third device. Therefore, the first device may transmit the first data unit over the direct link between the first device and the second device, without forwarding by the third device, thereby increasing a data transmission rate. In addition, when the first device includes a plurality of STAs, the protected data is constructed by using the addresses of the devices, and a change of the direct link does not affect the protected data. Therefore, when data is transmitted across a plurality of direct links, encryption does not need to be performed again, thereby further increasing the data transmission rate.

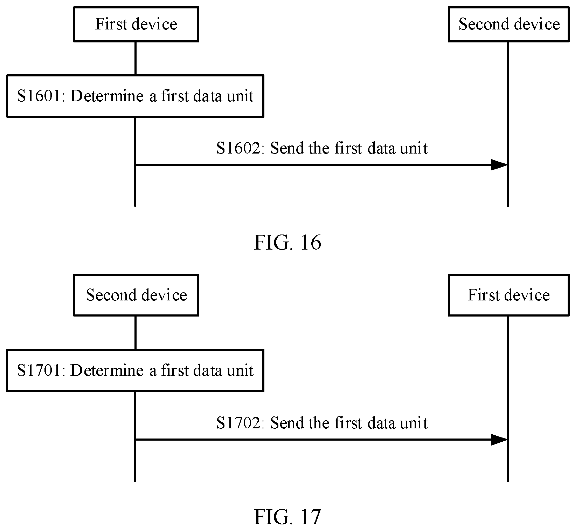

For example, FIG. 16 is a schematic flowchart of still another direct link addressing method according to an embodiment of this application. An example in which a first device is used as a TDLS initiator is used for description. The direct link addressing method is applicable to communication between the STA device and the non-AP MLD 2 that are shown in FIG. 1 or between the non-AP MLD 1 and the non-AP MLD 2 that are shown in FIG. 1.

S1601: The first device determines a first data unit.

The first data unit includes a first header, and the first header includes a fourth address, a fifth address, and a sixth address.

In some embodiments, the first data unit may include a frame body. For example, the frame body may be a TDLS frame or data.

For example, the first data unit may be the MPDU shown in FIG. 6, the first header may be the MPDU header shown in FIG. 6, and the TDLS frame or the data is carried in the frame body field.

In some embodiments, when the first device includes one STA, the fourth address is an address of a second device, the fifth address is an address of the first device, the sixth address is an address of a first AP of a third device, and the first device is connected to the first AP of the third device.

With reference to FIG. 8, the first AP is the AP 1 in FIG. 8. When the first device includes one STA, and the first device is used as the TDLS initiator, the fourth address, the fifth address, and the sixth address of the MPDU header are shown in Table 17. The fourth address is an address of the non-AP MLD 2, for example, a non-AP MLD 2 MAC address. The fifth address is an address of a legacy STA, for example, a legacy STA MAC address. The sixth address is an address of the AP 1, for example, a BSSID of the AP 1.

**Table 17**

| Scenario | First header | | |
|---|---|---|---|
| | Fourth address | Fifth address | Sixth address |
| (legacy STA, non-AP MLD 2) | non-AP MLD 2 MAC Address | legacy STA MAC Address | BSSID of the AP 1 |

In some embodiments, when the first device includes a plurality of STAs, the fourth address is an address of the second device, the fifth address is an address of the first device, and the sixth address is an address of an AP that corresponds to a sixth direct link and that is in a plurality of APs of the third device, where the sixth direct link is a link for transmitting the first data unit between the first device and the second device. The first data unit is transmitted over a direct link between the first device and the second device.

For example, FIG. 9 and FIG. 10 show an example in which the first device is the non-AP MLD 1, the second device is the non-AP MLD 2, and the third device is the AP MLD. When the first device includes a plurality of STAs, and the first device is used as the TDLS initiator, the fourth address, the fifth address, and the sixth address of the MPDU header are shown in Table 18. It is assumed that the first data unit is transmitted over a direct link 1, the fourth address is an address of a STA 1 of the non-AP MLD 2, for example, a non-AP MLD 2 MAC address; the fifth address is an address of a STA 1 of the non-AP MLD 1, for example, a non-AP MLD 1 MAC address; and the sixth address is an address of an AP 1 corresponding to the direct link 1, for example, an affiliated AP1 BSSID of the AP MLD.

**Table 18**

| Scenario | First header | | |
|---|---|---|---|
| | Fourth address | Fifth address | Sixth address |
| (legacy STA, non-AP MLD 2) | non-AP MLD 2 MAC Address | non-AP MLD 1 MAC Address | BSSID of the AP 1 |

Specifically, manners of configuring the sixth address corresponding to Table 17 and Table 18 may be the same in both a case in which the first device includes one STA and a case in which the first device includes a plurality of STAs, to avoid frequent modification of configured content of the sixth address, thereby reducing a transmission delay.

Optionally, the TDLS frame may be a TDLS discovery response frame.

Table 17 and Table 18 may be address configuration manners of a first header of a management frame. Because the TDLS discovery response frame is encapsulated into a common management frame and does not need to be encrypted, corresponding AAD construction may not be determined.

S1602: The first device sends the first data unit. Correspondingly, the second device receives the first data unit from the first device.

According to the direct link addressing method described in FIG. 16, when the first device includes one STA, the first header is constructed by using the address of the first device, the address of the second device, and the address of the first AP connected to the first device. When the first device includes a plurality of STAs, the first header is constructed by using the address of the first device, the address of the second device, and the address of the AP that corresponds to the sixth direct link and that is in the plurality of APs of the third device, where the sixth direct link is a link for transmitting the first data unit between the first device and the second device. Therefore, the first device may transmit the first data unit over the direct link between the first device and the second device, without forwarding by the third device, thereby increasing a data transmission rate. In addition, a manner of configuring the sixth address may be the same in both a case in which the first device includes one STA and a case in which the first device includes a plurality of STAs, to avoid frequent modification of configured content of the sixth address, thereby further reducing a transmission delay.

For example, FIG. 17 is a schematic flowchart of still another direct link addressing method according to an embodiment of this application. An example in which a second device is used as a TDLS initiator is used for description. The direct link addressing method is applicable to communication between the STA device and the non-AP MLD 2 that are shown in FIG. 1 or between the non-AP MLD 1 and the non-AP MLD 2 that are shown in FIG. 1.

S1701: The second device determines a first data unit.

The first data unit includes a first header, and the first header includes a fourth address, a fifth address, and a sixth address.

In some embodiments, the first data unit may include a frame body. For example, the frame body may be a TDLS frame or data.

For example, the first data unit may be the MPDU shown in FIG. 6, the first header may be the MPDU header shown in FIG. 6, and the TDLS frame or the data is carried in a frame body field.

In some embodiments, when a first device includes one STA, the fourth address is an address of the first device, the fifth address is an address of the second device, the sixth address is an address of a first AP of a third device, and the first device is connected to the first AP of the third device.

With reference to FIG. 8, when the first device includes one STA, and the second device is used as the TDLS initiator, the fourth address, the fifth address, and the sixth address of the MPDU header are shown in Table 19. Because the initiator and a responder change, a difference between Table 19 and Table 17 in S1601 lies in that configured content of the fourth address and configured content of the fifth address are exchanged. For details, see Table 19. Details are not described herein.

**Table 19**

| Scenario | First header | | |
|---|---|---|---|
| | Fourth address | Fifth address | Sixth address |
| (legacy STA, non-AP MLD 2) | legacy STA MAC Address | non-AP MLD 2 MAC Address | BSSID of an AP 1 |

In some embodiments, when the first device includes a plurality of STAs, the fourth address is an address of the first device, the fifth address is an address of the second device, and the sixth address is an address of an AP that corresponds to a sixth direct link and that is in a plurality of APs of a third device, where the sixth direct link is a link for transmitting the first data unit between the first device and the second device. The first data unit is transmitted over a direct link between the first device and the second device.

With reference to FIG. 9 and FIG. 10, when the first device includes a plurality of STAs, and the second device is used as the TDLS initiator, the fourth address, the fifth address, and the sixth address of the MPDU header are shown in Table 20. Because the initiator and a responder change, a difference between Table 20 and Table 18 in S1601 lies in that configured content of the fourth address and configured content of the fifth address are exchanged. For details, see Table 20. Details are not described herein.

**Table 20**

| Scenario | First header | | |
|---|---|---|---|
| | Fourth address | Fifth address | Sixth address |
| (non-AP MLD 1, non-AP MLD 2) | affiliated STA 1 MAC address of the non-AP MLD 1 | affiliated STA 1 MAC address of the non-AP MLD 2 | Affiliated AP 1 BSSID of the AP MLD |

Optionally, the TDLS frame may be a TDLS discovery response frame.

S1702: The second device sends the first data unit. Correspondingly, the first device receives the first data unit from the second device.

It should be noted that for a technical effect of the method shown in FIG. 17, refer to a technical effect of the method shown in FIG. 16. Details are not described herein again.

It should be noted that an address configuration rule of the first data unit (for example, an MPDU) and protected data (for example, an AAD) construction provided in this embodiment of this application is applicable to a unicast frame.

The following describes several special application scenarios to which embodiments of this application are applicable. It should be understood that application scenarios of embodiments of this application are not limited to the following several application scenarios.

### Scenario 1

It is assumed that the AP MLD corresponds to three links (link): a link 1, a link 2, and a link 3. Two links, the link 1 and the link 2, are set up between the non-AP MLD 1 and the AP MLD, and the link 1 and the link 3 are set up between the non-AP MLD 2 and the AP MLD. In this case, the non-AP MLD 1 and the non-AP MLD 2 may set up multi-link TDLS. The link 1 is referred to as a common link, and the other link is referred to as a non-common link. A link identifier corresponding to the link 1 may be indicated by a link ID or a BSSID of an AP associated with either end of the link. For data transmission on the non-common link, two ends of the non-common link may negotiate, through the common link, on which channel data is transmitted. For example, when the non-common link is switched to a channel on which one end is located for transmission, a peer end is equivalent to off-channel (off-channel) transmission, and the peer end needs to notify the AP that the peer end enters a doze (Doze) state, and then switches to a channel on which the other end is located for direct transmission.

In the foregoing scenario, at least one common link needs exist to set up a direct link between non-AP MLDs. Otherwise, a TDLS discovery response is not allowed to be replied or TDLS setup is initiated. When a plurality of common links exist between non-AP MLDs, the TDLS discovery response may be replied over any common link. However, when a link corresponding to the BSSID field in the link identifier element is also a common link, the TDLS discovery response may be preferably replied over the common link.

In addition, non-AP MLDs on both ends can use different address modes, such as transparent transmission mode and non-transparent transmission mode.

### Scenario 2

It is assumed that the AP MLD corresponds to three links: a link 1, a link 2, and a link 3. Two links, the link 1 and the link 2, are set up between the non-AP MLD 1 and the AP MLD, and the legacy STA is associated with the link 2. If the non-AP MLD, as an initiator, sends a TDLS discovery request frame, and a BSSID in a link identifier element carried in the TDLS discovery request frame is set to a BSSID corresponding to the link 1, after receiving the TDLS discovery request frame, when the legacy STA finds that the BSSID in the link identifier element is inconsistent with a BSSID in which the legacy STA is located, the legacy STA does not return a TDLS discovery response frame on the link 2, resulting in a discovery failure. This situation occurs because the non-AP MLD does not know whether a peer end is a legacy STA or a non-AP MLD, and does not know which AP the peer end is associated with.

To avoid this situation, the non-AP MLD may resend a TDLS discovery request frame, and a BSSID in a link identifier element carried in the TDLS discovery request frame is set to a BSSID corresponding to the link 2. In this way, after receiving the TDLS discovery request frame, when the legacy STA finds that the BSSID in the link identifier element is consistent with the BSSID in which the legacy STA is located, the legacy STA returns a TDLS discovery response frame on the link 2, so that discovery succeeds.

### Scenario 3

It is assumed that the AP MLD corresponds to three links: a link 1, a link 2, and a link 3. Two links, the link 1 and the link 2, are set up between the non-AP MLD 1 and the AP MLD, and the legacy STA is associated with the link 2. If the legacy STA, as an initiator, sends a TDLS discovery request frame on the link 2, after receiving the TDLS discovery request frame, the non-AP MLD can return a TDLS discovery response frame only over a link (namely, the link 2) indicated by a BSSID in a link identifier element.

When both the TDLS initiator and the TDLS responder are MLDs, the TDLS discovery request and the TDLS discovery response frame each carry a multi-link element. In this way, both ends know that a peer end is also an MLD device through a TDLS discovery process. In addition, through the TDLS discovery process, the TDLS initiator and the TDLS responder can know which links are common links.

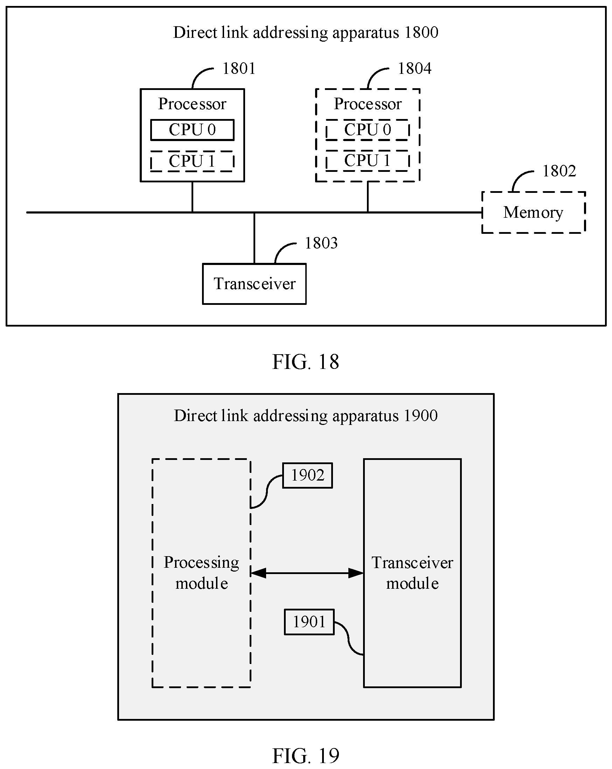

The direct link addressing method provided in embodiments of this application is described above in detail with reference to FIG. 7 to FIG. 17. The following describes in detail a direct link addressing apparatus provided in embodiments of this application with reference to FIG. 18 and FIG. 19.

FIG. 18 is a schematic diagram of a structure of a direct link addressing apparatus that can be configured to perform the direct link addressing method provided in embodiments of this application. A direct link addressing apparatus 1800 may be a first device or a second device, or may be a chip applied to a first device or a second device or another component having a corresponding function. As shown in FIG. 18, the direct link addressing apparatus 1800 may include a processor 1801 and a transceiver 1803. The direct link addressing apparatus 1800 may further include a memory 1802. The processor 1801 is coupled to the memory 1802 and the transceiver 1803. For example, the processor 1801 may be connected to the memory 1802 and the transceiver 1803 through a communication bus. The processor 1801 may alternatively be independently used.

The following describes each component of the direct link addressing apparatus 1800 in detail with reference to FIG. 18.

The processor 1801 is a control center of the direct link addressing apparatus 1800; and may be one processor, or may be a collective term of a plurality of processing elements. For example, the processor 1801 is one or more central processing units (central processing unit, CPU), or may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

The processor 1801 may execute various functions of the direct link addressing apparatus 1800 by running or executing a software program stored in the memory 1802 and invoking data stored in the memory 1802.

During specific implementation, in an embodiment, the processor 1801 may include one or more CPUs, such as a CPU 0 and a CPU 1 that are shown in FIG. 18.

During specific implementation, in an embodiment, the direct link addressing apparatus 1800 may alternatively include a plurality of processors, for example, the processor 1801 and a processor 1804 that are shown in FIG. 18. Each of the processors may be a single-core processor (single-CPU) or may be a multi-core processor (multi-CPU). The processor herein may be one or more communication devices, circuits, and/or processing cores configured to process data (for example, computer program instructions).

The memory 1802 may be a read-only memory (read-only memory, ROM) or another type of static storage communication device that can store static information and instructions, a random access memory (random access memory, RAM) or another type of dynamic storage communication device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage communication device, or any other medium that can be used for carrying or storing expected program code in a form of an instruction or a data structure and that can be accessed by a computer. However, the memory 1802 is not limited thereto. The memory 1802 may be integrated with the processor 1801; or may exist independently, and is coupled to the processor 1801 through an input/output port (not shown in FIG. 18) of the direct link addressing apparatus 1800. This is not specifically limited in this embodiment of this application.

The memory 1802 is configured to store a software program for executing the solutions of this application, and the processor 1801 controls execution. For the foregoing specific implementation, refer to the following method embodiments. Details are not described herein again.

The transceiver 1803 is configured to communicate with another direct link addressing apparatus. For example, when the direct link addressing apparatus 1800 is the first device, the transceiver 1803 may be configured to communicate with the second device and a third device. For another example, when the direct link addressing apparatus 1800 is the second device, the transceiver 1803 may be configured to communicate with the first device and the third device. In addition, the transceiver 1803 may include a receiver and a transmitter (not separately shown in FIG. 18). The receiver is configured to implement a receiving function, and the transmitter is configured to implement a sending function. The transceiver 1803 may be integrated with the processor 1801; or may exist independently, and is coupled to the processor 1801 through the input/output port (not shown in FIG. 18) of the direct link addressing apparatus 1800. This is not specifically limited in this embodiment of this application.

It should be noted that a structure of the direct link addressing apparatus 1800 shown in FIG. 18 does not constitute a limitation on the direct link addressing apparatus. An actual direct link addressing apparatus may include more or fewer components than those shown in the figure, or combine some components, or have different component arrangements.

Actions of the first device in the foregoing steps S701 and S702 and S1601 and S1602 may be performed by the processor 1801 in the direct link addressing apparatus 1800 shown in FIG. 18 by invoking application program code stored in the memory 1802 to indicate a remote terminal device to perform.

Actions of the second device in the foregoing steps S1501 and S1502 and S1701 and S1702 may be performed by the processor 1801 in the direct link addressing apparatus 1800 shown in FIG. 18 by invoking the application program code stored in the memory 1802 to indicate the remote terminal device to perform. This is not limited in this embodiment.

FIG. 19 is a schematic diagram of a structure of another direct link addressing apparatus according to an embodiment of this application. For ease of description, FIG. 19 shows only main components of the direct link addressing apparatus.

A direct link addressing apparatus 1900 includes a transceiver module 1901. Optionally, the direct link addressing apparatus 1900 may further include a processing module 1902. The direct link addressing apparatus 1900 may be the first device or the second device in the foregoing method embodiments. The transceiver module 1901 may also be referred to as a transceiver unit, and is configured to implement a transceiver function performed by the first device or the second device in any one of the foregoing method embodiments.

It should be noted that the transceiver module 1901 may include a receiving module and a sending module (not shown in FIG. 19). The receiving module is configured to implement a receiving function performed by the first device or the second device in any one of the foregoing method embodiments. The sending module is configured to implement a sending function performed by the first device or the second device in any one of the foregoing method embodiments. A specific implementation of the transceiver module 1901 is not specifically limited in this application.

The processing module 1902 may also be referred to as a processing unit, and may be configured to implement a processing function performed by the first device or the second device in any one of the foregoing method embodiments. The processing module 1902 may be a processor.

In this embodiment, the direct link addressing apparatus 1900 is presented in a form of dividing each functional module in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the direct link addressing apparatus 1900 may be in a form of the direct link addressing apparatus 1800 shown in FIG. 18.

For example, the processor 1801 in the direct link addressing apparatus 1800 shown in FIG. 18 may invoke computer-executable instructions stored in the memory 1802, so that the direct link addressing apparatus 1800 performs the direct link addressing method in the foregoing method embodiments.

Specifically, a function/implementation process of the transceiver module 1901 and the processing module 1902 in FIG. 19 may be implemented by the processor 1801 in the direct link addressing apparatus 1800 shown in FIG. 18 by invoking the computer-executable instructions stored in the memory 1802. Alternatively, a function/implementation process of the processing module 1902 in FIG. 19 may be implemented by the processor 1801 in the direct link addressing apparatus 1800 shown in FIG. 18 by invoking the computer-executable instructions stored in the memory 1802, and a function/implementation process of the transceiver module 1901 in FIG. 19 may be implemented by the transceiver 1803 in the direct link addressing apparatus 1800 shown in FIG. 18.

Because the direct link addressing apparatus 1900 provided in this embodiment may execute the foregoing direct link addressing method, for technical effects that can be achieved by the direct link addressing apparatus 1900, refer to the foregoing method embodiments. Details are not described herein again.

In a possible design solution, the direct link addressing apparatus 1900 shown in FIG. 19 is applicable to the communication system shown in FIG. 1, and perform a function of the first device in the direct link addressing method shown in FIG. 7. The direct link addressing apparatus 1900 includes one or more stations STAs. The direct link addressing apparatus 1900 is connected to a third device, and the third device includes a plurality of access points APs. The second device is connected to the third device, and the second device includes a plurality of STAs.

The processing module 1902 is configured to determine protected data. The protected data includes a first address, a second address, and a third address. When the direct link addressing apparatus 1900 includes one STA, the first address is an address of the second device, the second address is an address of the direct link addressing apparatus 1900, the third address is an address of a first AP of the third device, and the direct link addressing apparatus 1900 is connected to the first AP of the third device. When the direct link addressing apparatus 1900 includes a plurality of STAs, the first address is an address of the second device, the second address is an address of the direct link addressing apparatus 1900, and the third address is an address of the third device.

The transceiver module 1901 is configured to send a first data unit. The first data unit includes a first header, the first header is determined based on the protected data, and the first data unit is transmitted over a direct link between the direct link addressing apparatus 1900 and the second device.

Optionally, the direct link addressing apparatus 1900 may further include a storage module (not shown in FIG. 19), and the storage module stores programs or instructions. When the processing module 1902 executes the programs or the instructions, the direct link addressing apparatus 1900 may perform the function of the first device in the direct link addressing method shown in FIG. 7.

It should be noted that the direct link addressing apparatus 1900 may be the first device, or may be a chip (system) or another component or assembly that may be disposed in the first device. This is not limited in this application.

In addition, for a technical effect of the direct link addressing apparatus 1900, refer to a technical effect of the direct link addressing method shown in FIG. 7. Details are not described herein again.

In another possible design solution, the direct link addressing apparatus 1900 shown in FIG. 19 is applicable to the communication system shown in FIG. 1, and perform a function of the second device in the direct link addressing method shown in FIG. 7. The direct link addressing apparatus 1900 includes a plurality of stations STAs. The direct link addressing apparatus 1900 is connected to a third device, and the third device includes a plurality of access points APs. The first device is connected to the third device, and the first device includes one or more STAs.

The transceiver module 1901 is configured to receive a first data unit. The first data unit includes a first header, the first header is determined based on protected data, and the first data unit is transmitted over a direct link between the first device and the direct link addressing apparatus 1900. The protected data includes a first address, a second address, and a third address. When the first device includes one STA, the first address is an address of the direct link addressing apparatus 1900, the second address is an address of the first device, the third address is an address of a first AP of the third device, and the first device is connected to the first AP of the third device. When the first device includes a plurality of STAs, the first address is an address of the direct link addressing apparatus 1900, the second address is an address of the first device, and the third address is an address of the third device.

Optionally, the direct link addressing apparatus 1900 may further include the processing module 1902 and a storage module (not shown in FIG. 19), and the storage module stores programs or instructions. When the processing module 1902 executes the programs or the instructions, the direct link addressing apparatus 1900 may perform the function of the second device in the direct link addressing method shown in FIG. 7.

It should be noted that the direct link addressing apparatus 1900 may be the second device, or may be a chip (system) or another component or assembly that may be disposed in the second device. This is not limited in this application.

In addition, for a technical effect of the direct link addressing apparatus 1900, refer to a technical effect of the direct link addressing method shown in FIG. 7. Details are not described herein again.

In still another possible design solution, the direct link addressing apparatus 1900 shown in FIG. 19 is applicable to the communication system shown in FIG. 1, and perform a function of the second device in the direct link addressing method shown in FIG. 15. The direct link addressing apparatus 1900 includes a plurality of stations STAs, the direct link addressing apparatus 1900 is connected to a third device, the third device includes a plurality of access points APs, the first device is connected to the third device, and the first device includes one or more STAs.

The processing module 1902 is configured to determine protected data. The protected data includes a first address, a second address, and a third address. When the first device includes one STA, the first address is an address of the first device, the second address is an address of the direct link addressing apparatus 1900, the third address is an address of a first AP of the third device, and the first device is connected to the first AP of the third device. When the first device includes a plurality of STAs, the first address is an address of the first device, the second address is an address of the direct link addressing apparatus 1900, and the third address is an address of the third device.

The transceiver module 1901 is configured to send a first data unit. The first data unit includes a first header, the first header is determined based on the protected data, and the first data unit is transmitted over a direct link between the first device and the direct link addressing apparatus 1900.

Optionally, the direct link addressing apparatus 1900 may further include a storage module (not shown in FIG. 19), and the storage module stores programs or instructions. When the processing module 1902 executes the programs or the instructions, the direct link addressing apparatus 1900 may perform a function of the second device in the direct link addressing method shown in FIG. 15.

It should be noted that the direct link addressing apparatus 1900 may be the second device, or may be a chip (system) or another component or assembly that may be disposed in the second device. This is not limited in this application.

In addition, for a technical effect of the direct link addressing apparatus 1900, refer to a technical effect of the direct link addressing method shown in FIG. 15. Details are not described herein again.

In still another possible design solution, the direct link addressing apparatus 1900 shown in FIG. 19 is applicable to the communication system shown in FIG. 1, and perform a function of the first device in the direct link addressing method shown in FIG. 15. The direct link addressing apparatus 1900 includes one or more stations STAs. The direct link addressing apparatus 1900 is connected to a third device, the third device includes a plurality of access points APs, the second device is connected to the third device, and the second device includes a plurality of STAs.

The transceiver module 1901 is configured to receive a first data unit. The first data unit includes a first header, the first header is determined based on the protected data, and the first data unit is transmitted over a direct link between the direct link addressing apparatus 1900 and the second device. The protected data includes a first address, a second address, and a third address. When the direct link addressing apparatus 1900 includes one STA, the first address is an address of the direct link addressing apparatus 1900, the second address is an address of the second device, and the third address is an address of a first AP of the third device, the direct link addressing apparatus 1900 is connected to the first AP of the third device, and the direct link addressing apparatus 1900 includes one STA. When the direct link addressing apparatus 1900 includes a plurality of STAs, the first address is an address of the direct link addressing apparatus 1900, the second address is an address of the second device, and the third address is an address of the third device.

Optionally, the direct link addressing apparatus 1900 may further include a processing module 1902 and a storage module (not shown in FIG. 19), and the storage module stores programs or instructions. When the processing module 1902 executes the programs or the instructions, the direct link addressing apparatus 1900 may perform a function of the first device in the direct link addressing method shown in FIG. 15.

It should be noted that the direct link addressing apparatus 1900 may be the first device, or may be a chip (system) or another component or assembly that may be disposed in the first device. This is not limited in this application.

In addition, for a technical effect of the direct link addressing apparatus 1900, refer to a technical effect of the direct link addressing method shown in FIG. 15. Details are not described herein again.

In still another possible design solution, the direct link addressing apparatus 1900 shown in FIG. 19 is applicable to the communication system shown in FIG. 1, and perform a function of the first device in the direct link addressing method shown in FIG. 16. The direct link addressing apparatus 1900 includes one or more stations STAs. The direct link addressing apparatus 1900 is connected to a third device, the third device includes a plurality of access points APs, the second device is connected to the third device, and the second device includes a plurality of STAs.

The processing module 1902 is configured to determine the first data unit. The first data unit includes a first header and a tunneled direct-link setup TDLS frame, and the first header includes a fourth address, a fifth address, and a sixth address. When the direct link addressing apparatus 1900 includes one STA, the fourth address is an address of the second device, the fifth address is an address of the direct link addressing apparatus 1900, the sixth address is an address of the first AP of the third device, and the direct link addressing apparatus 1900 is connected to the first AP of the third device. When the direct link addressing apparatus 1900 includes a plurality of STAs, the fourth address is an address of the second device, the fifth address is an address of the direct link addressing apparatus 1900, the sixth address is an address of an AP that corresponds to a sixth direct link and that is in the plurality of APs of the third device, and the sixth direct link is a link for transmitting the TDLS frame between the direct link addressing apparatus 1900 and the second device.

The transceiver module 1901 is configured to send a first data unit. The first data unit is transmitted over a direct link between the direct link addressing apparatus 1900 and the second device.

Optionally, the TDLS frame may be a TDLS discovery response frame.

Optionally, the direct link addressing apparatus 1900 may further include a storage module (not shown in FIG. 19), and the storage module stores programs or instructions. When the processing module 1902 executes the programs or the instructions, the direct link addressing apparatus 1900 may perform a function of the first device in the direct link addressing method shown in FIG. 16.

It should be noted that the direct link addressing apparatus 1900 may be the first device, or may be a chip (system) or another component or assembly that may be disposed in the first device. This is not limited in this application.

In addition, for a technical effect of the direct link addressing apparatus 1900, refer to a technical effect of the direct link addressing method shown in FIG. 16. Details are not described herein again.

In still another possible design solution, the direct link addressing apparatus 1900 shown in FIG. 19 is applicable to the communication system shown in FIG. 1, and perform a function of the second device in the direct link addressing method shown in FIG. 16. The direct link addressing apparatus 1900 includes a plurality of stations STAs. The direct link addressing apparatus 1900 is connected to a third device, and the third device includes a plurality of access points APs. The first device is connected to the third device, and the first device includes one or more STAs.

The transceiver module 1901 is configured to receive a first data unit. The first data unit includes a first header and a tunneled direct-link setup TDLS frame, and the first header includes a fourth address, a fifth address, and a sixth address.

When the first device includes one STA, the fourth address is an address of the direct link addressing apparatus 1900, the fifth address is an address of the first device, the sixth address is an address of a first AP of the third device, and the first device is connected to the first AP of the third device. When the first device includes a plurality of STAs, the fourth address is an address of the direct link addressing apparatus 1900, the fifth address is an address of the first device, the sixth address is an address of an AP that corresponds to a sixth direct link and that is in the plurality of APs of the third device, and the sixth direct link is a link for transmitting the TDLS frame between the first device and the direct link addressing apparatus 1900. The first data unit is transmitted over a direct link between the first device and the direct link addressing apparatus 1900.

Optionally, the TDLS frame may be a TDLS discovery response frame.

Optionally, the direct link addressing apparatus 1900 may further include the processing module 1902 and a storage module (not shown in FIG. 19), and the storage module stores programs or instructions. When the processing module 1902 executes the programs or the instructions, the direct link addressing apparatus 1900 may perform the function of the second device in the direct link addressing method shown in FIG. 16.

It should be noted that the direct link addressing apparatus 1900 may be the second device, or may be a chip (system) or another component or assembly that may be disposed in the second device. This is not limited in this application.

In addition, for a technical effect of the direct link addressing apparatus 1900, refer to a technical effect of the direct link addressing method shown in FIG. 16. Details are not described herein again.

In still another possible design solution, the direct link addressing apparatus 1900 shown in FIG. 19 is applicable to the communication system shown in FIG. 1, and perform a function of the second device in the direct link addressing method shown in FIG. 17. The direct link addressing apparatus 1900 includes a plurality of stations STAs. The direct link addressing apparatus 1900 is connected to a third device, and the third device includes a plurality of access points APs. The first device is connected to the third device, and the first device includes one or more STAs.

The processing module 1902 is configured to determine a first data unit. The first data unit includes a first header and a tunneled direct-link setup TDLS frame, and the first header includes a fourth address, a fifth address, and a sixth address.

The transceiver module 1901 is configured to send the first data unit. When the first device includes one STA, the fourth address is an address of the first device, the fifth address is an address of the direct link addressing apparatus 1900, the sixth address is an address of a first AP of the third device, and the first device is connected to the first AP of the third device. When the first device includes a plurality of STAs, the fourth address is an address of the first device, the fifth address is an address of the direct link addressing apparatus 1900, and the sixth address is an address of an AP that corresponds to a sixth direct link and that is in the plurality of APs of the third device. The sixth direct link is a link for transmitting the TDLS frame between the first device and the direct link addressing apparatus 1900. The first data unit is transmitted over a direct link between the first device and the direct link addressing apparatus 1900.

Optionally, the TDLS frame may be a TDLS discovery response frame.

Optionally, the direct link addressing apparatus 1900 may further include the processing module 1902 and a storage module (not shown in FIG. 19), and the storage module stores programs or instructions. When the processing module 1902 executes the programs or the instructions, the direct link addressing apparatus 1900 may perform the function of the second device in the direct link addressing method shown in FIG. 17.

It should be noted that the direct link addressing apparatus 1900 may be the second device, or may be a chip (system) or another component or assembly that may be disposed in the second device. This is not limited in this application.

In addition, for a technical effect of the direct link addressing apparatus 1900, refer to a technical effect of the direct link addressing method shown in FIG. 17. Details are not described herein again.

In still another possible design solution, the direct link addressing apparatus 1900 shown in FIG. 19 is applicable to the communication system shown in FIG. 1, and perform a function of the first device in the direct link addressing method shown in FIG. 17. The direct link addressing apparatus 1900 includes one or more stations STAs. The direct link addressing apparatus 1900 is connected to a third device, and the third device includes a plurality of access points APs. The second device is connected to the third device, and the second device includes a plurality of STAs.

The transceiver module 1901 is configured to receive a first data unit. The first data unit includes a first header and a tunneled direct-link setup TDLS frame, and the first header includes a fourth address, a fifth address, and a sixth address.

When the direct link addressing apparatus 1900 includes one STA, the fourth address is an address of the direct link addressing apparatus 1900, the fifth address is an address of the second device, the sixth address is an address of a first AP of the third device, and the direct link addressing apparatus 1900 is connected to the first AP of the third device. When the direct link addressing apparatus 1900 includes a plurality of STAs, the fourth address is an address of the direct link addressing apparatus 1900, the fifth address is an address of the second device, and the sixth address is an address of an AP that corresponds to a sixth direct link and that is in the plurality of APs of the third device. The sixth direct link is a link for transmitting the TDLS frame between the direct link addressing apparatus 1900 and the second device. The first data unit is transmitted over a direct link between the direct link addressing apparatus 1900 and the second device.

Optionally, the TDLS frame may be a TDLS discovery response frame.

Optionally, the direct link addressing apparatus 1900 may further include the processing module 1902 and a storage module (not shown in FIG. 19), and the storage module stores programs or instructions. When the processing module 1902 executes the programs or the instructions, the direct link addressing apparatus 1900 may perform the function of the first device in the direct link addressing method shown in FIG. 17.

It should be noted that the direct link addressing apparatus 1900 may be the first device, or may be a chip (system) or another component or assembly that may be disposed in the first device. This is not limited in this application.

In addition, for a technical effect of the direct link addressing apparatus 1900, refer to a technical effect of the direct link addressing method shown in FIG. 17. Details are not described herein again.

An embodiment of this application provides a communication system. The communication system includes a first device and a second device. The communication system may further include a second device. The first device is configured to perform actions of the first device in the foregoing method embodiments. For a specific execution method and process, refer to the foregoing method embodiments. Details are not described herein again. The second device is configured to perform actions of the second device in the foregoing method embodiments. For a specific execution method and process, refer to the foregoing method embodiments. Details are not described herein again. The third device is configured to perform actions of the third device in the foregoing method embodiments. For a specific execution method and process, refer to the foregoing method embodiments. Details are not described herein again.

An embodiment of this application provides a chip system. The chip system includes a processor and an input/output port. The processor is configured to implement a processing function in the direct link addressing method provided in embodiments of this application. The input/output port is configured to implement a transceiver function in the direct link addressing method provided in embodiments of this application.

In a possible design, the chip system further includes a memory. The memory is configured to store program instructions and data for implementing a function in the direct link addressing method provided in embodiments of this application.

The chip system may include a chip, or may include a chip and another discrete component.

An embodiment of this application provides a computer-readable storage medium. The computer-readable storage medium includes computer programs or instructions. When the computer programs or the instructions are run on a computer, the computer is enabled to perform the direct link addressing method provided in embodiments of this application.

An embodiment of this application provides a computer program product. The computer program product includes computer programs or instructions. When the computer programs or the instructions are run on a computer, the computer is enabled to perform the direct link addressing method provided in embodiments of this application.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and indicates that there may be three relationships. For example, A and/or B may indicate the following three cases: Only A exists, both A and B exist, and only B exists. A and B may be singular or plural. In addition, the character "/" in this specification usually indicates an "or" relationship between associated objects, or may indicate an "and/or" relationship. A specific meaning depends on the context.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A direct link addressing method, applied to a second device, wherein the second device comprises a plurality of stations STAs, the second device is connected to a third device, the third device comprises a plurality of access points APs, a first device is connected to the third device, the first device comprises one or more STAs, and the method comprises:
receiving at least two tunneled direct-link setup discovery request TDLS discovery request frames, wherein the TDLS discovery request frame comprises an identifier field indicating an AP in the third device, and different TDLS discovery request frames one-to-one correspond to different APs in the third device; and
sending, by a STA that is associated with the AP of the third device and that is in the plurality of STAs of the second device, a tunneled direct-link setup discovery response TDLS discovery response frame.

2. The method according to claim 1, wherein the identifier field is a basic service set identifier BSSID, and the BSSID is carried in a link identifier element field of the TDLS discovery request frame.

3. The method according to claim 1 or 2, wherein the TDLS discovery request frame comprises a multi-link element field, the multi-link element field comprises a type subfield, and the type subfield indicates tunneled direct-link setup.

4. The method according to any one of claims 1 to 3, wherein the TDLS discovery request frame comprises the multi-link element field, the multi-link element field comprises an MLD MAC address field, and the MLD MAC address field indicates a MAC address of the third device.

5. The method according to any one of claims 1 to 4, wherein the method further comprises: binding the MAC address of the third device to a TDLS peer key TPK.

6. A second device, wherein the second device comprises a plurality of stations STAs, the second device is connected to a third device, the third device comprises a plurality of access points APs, a first device is connected to the third device, the first device comprises one or more STAs, and the second device comprises:
a transceiver unit, configured to receive at least two tunneled direct-link setup discovery request TDLS discovery request frames, wherein the TDLS discovery request frame comprises an identifier field indicating an AP in the third device, and different TDLS discovery request frames one-to-one correspond to different APs in the third device, wherein
a STA that is associated with the AP of the third device and that is in the plurality of STAs of the second device sends a tunneled direct-link setup discovery response TDLS discovery response frame.

7. The second device according to claim 6, wherein the identifier field is a basic service set identifier BSSID, and the BSSID is carried in a link identifier element field of the TDLS discovery request frame.

8. The second device according to claim 6 or 7, wherein the TDLS discovery request frame comprises a multi-link element field, the multi-link element field comprises a type subfield, and the type subfield indicates tunneled direct-link setup.

9. The second device according to any one of claims 6 to 8, wherein the TDLS discovery request frame comprises the multi-link element field, the multi-link element field comprises an MLD MAC address field, and the MLD MAC address field indicates a MAC address of the third device.

10. The second device according to any one of claims 6 to 9, wherein the MAC address of the third device is bound to a TDLS peer key TPK.

11. A direct link addressing apparatus, wherein the direct link addressing apparatus comprises units or modules configured to perform the method according to any one of claims 1 to 6.

12. A direct link addressing apparatus, wherein the direct link addressing apparatus comprises a processor, and the processor is coupled to a memory;
the memory is configured to store a computer program; and
the processor is configured to execute the computer program stored in the memory, so that the direct link addressing apparatus performs the method according to any one of claims 1 to 6.

13. A computer-readable storage medium, wherein the computer-readable storage medium comprises computer programs or instructions; and when the computer programs or instructions are run on a computer, the computer is enabled to perform the method according to any one of claims 1 to 6.

14. A computer program product, wherein the computer program product comprises computer programs or instructions; and when the computer programs or instructions are run on a computer, the computer is enabled to perform the method according to any one of claims 1 to 6.

15. A chip, wherein the chip comprises a processor and an input/output port, when computer programs or instructions are run, the chip is enabled to perform the method according to any one of claims 1 to 6.
